# EUROPEAN PATENT APPLICATION

(11) **EP 4 161 113 A1**
(43) Date of publication of application: **05.04.2023**
(21) Application number: 21824798.9
(22) Date of filing: 04.06.2021
(51) Int. Cl.: H04W 8/08

(54) **COMMUNICATION METHOD AND RELATED APPARATUS**

(30) Priority: 15.06.2020 CN 202010544961
(71) Applicant: Huawei Technologies Co., Ltd., Longgang District, Shenzhen, Guangdong 518129 (CN)
(72) Inventor: DENG, Juan, Shenzhen, Guangdong 518129 (CN); LI, Fei, Shenzhen, Guangdong 518129 (CN); HE, Chengdong, Shenzhen, Guangdong 518129 (CN)
(74) Representative: Huawei European IPR
(86) International application number: PCT/CN2021/098242
(87) International publication number: WO 2021/254172

(57) **Abstract**

Embodiments of this application disclose a communication method and a related apparatus, and the communication method and the related apparatus may be applied to a standalone non-public network architecture. An authentication server function AUSF in a network device generates a first identifier. The first identifier identifies a terminal device. The AUSF sends the first identifier to an access and mobility management function AMF, to prevent the AUSF from sending a subscription permanent identifier of the terminal device to the AMF. Because the subscription permanent identifier of the terminal device is privacy information, leaking of the privacy information of the terminal device is avoided, so that communication security is improved.

## Description

This application claims priority to Chinese Patent Application No. 202010544961.4, filed with the China National Intellectual Property Administration on June 15, 2020 and entitled "COMMUNICATION METHOD AND RELATED APPARATUS", which is incorporated herein by reference in its entirety.

### TECHNICAL FIELD

This application relates to the field of communication technologies, and in particular, to a communication method and a related apparatus.

### BACKGROUND

A public land mobile network (public land mobile network, PLMN) and a standalone non-public network (Standalone Non-Public Network, SNPN) are defined in the 3rd generation partnership project (the 3rd generation partnership project, 3GPP) standard.

In a roaming architecture, a visited network of a terminal device, which is also referred to as user equipment (User Equipment, UE), may be an SNPN or a PLMN. When the visited network of the UE is an SNPN, the visited network of the UE is referred to as a visited SNPN (Visited SNPN, V-SNPN). When the visited network of the UE is a PLMN, the visited network of the UE is referred to as a visited PLMN (Visited PLMN, V-PLMN). A home network of the UE may be an SNPN or a PLMN. When the home network of the UE is an SNPN, the home network of the UE is referred to as a home SNPN (Home SNPN, H-SNPN). When the home network of the UE is a PLMN, the home network of the UE is referred to as a home PLMN (Home PLMN, H-PLMN).

In an authentication procedure, the home network of the UE sends a subscription permanent identifier (subscription permanent identifier, SUPI) of the UE to the visited network of the UE. The SUPI identifies the UE, and the SUPI is privacy information. If the SUPI leaks, a great risk is caused to the UE.

### SUMMARY

According to a first aspect, an embodiment of this application proposes a communication method. The method includes: First, an authentication server function AUSF receives a subscription permanent identifier SUPI of a terminal device UE that is sent by a unified data management function (Unified Data Management, UDM). The terminal device is also referred to as user equipment (user equipment, UE). The SUPI identifies the UE. The AUSF generates a first identifier based on the SUPI. The first identifier identifies the UE. The AUSF sends the first identifier to a security anchor function (Security Anchor Function, SEAF). The SEAF sends the first identifier to an access and mobility management function (Access and Mobility Management Function, AMF). The SEAF generates a second intermediate key K_{AMF} based on a first intermediate key K_{SEAF}, the first identifier, and an anti bidding down between architectures (Anti Bidding down Between Architectures, ABBA) parameter. The SEAF sends the second intermediate key K_{AMF} to the access and mobility management function (Access and Mobility Management Function, AMF). The AMF generates a non-access stratum (Non-access stratum, NAS) key based on the second intermediate key K_{AMF}. The NAS key is for protecting a NAS message.

It may be understood that the NAS message is a protocol message between the UE and the AMF.

It should be noted that, in this embodiment of this application, unless otherwise specified, the SEAF and the AMF are integrated, and are displayed as a network function. Information exchange between the SEAF and the AMF is an internal action of the network function. In this embodiment of this application, the SEAF and the AMF may be alternately used. For example, the AUSF first receives the SUPI of the UE that is sent by the UDM. The AUSF generates the first identifier based on the SUPI. The first identifier identifies the UE. The AUSF sends the first identifier to the AMF. The AMF generates the K_{AMF} based on the K_{SEAF}, the first identifier, and the ABBA parameter. The AMF generates the NAS key based on the K_{AMF}. The NAS key is for protecting the NAS message.

In this embodiment of this application, that the UE sends a message or an information element to the SEAF means that the UE sends the message or the information element to the AMF, and the AMF sends the message or the information element to the SEAF. That the SEAF sends a message or an information element to the UE means that the SEAF sends the message or the information element to the AMF, and the AMF sends the message or the information element to the UE. That the AUSF sends a message or an information element to the AMF means that the AUSF sends the message or the information element to the SEAF, and the SEAF sends the message or the information element to the AMF. That the AMF sends a message or an information element to the AUSF means that the AMF sends the message or the information element to the SEAF, and the SEAF sends the message or the information element to the AUSF.

In this embodiment of this application, the AUSF generates the first identifier. The first identifier identifies the UE. The AUSF sends the first identifier to the SEAF, to prevent the AUSF from sending the SUPI to the SEAF. This avoids leaking of privacy information of the UE to the SEAF (or a visited network of the UE). Therefore, communication security is improved.

With reference to the first aspect, in a possible implementation of the first aspect, after the AUSF generates the first identifier based on the SUPI, the method further includes:
First, the AUSF sends the first identifier to the UDM. Then, after receiving the first identifier from the AUSF, the UDM stores a correspondence between the first identifier and the SUPI. The UDM further stores subscription data of the UE identified by the SUPI. Therefore, the UDM optionally stores a correspondence between the first identifier, the SUPI corresponding to the first identifier, and the subscription data of the UE corresponding to the SUPI.

Optionally, the AUSF sends the first identifier to the UDM by using an authentication result confirmation service request. The authentication result confirmation service request is for notifying the UDM of an authentication result of the terminal device. For example, the authentication result confirmation service request is a "Nudm_UEAuthentication_ResultConfirmation Request" message.

In this embodiment of this application, after receiving the first identifier sent by the AUSF, the UDM stores the correspondence between the first identifier and the SUPI. When the UDM receives, in the future, a service request that carries the first identifier and that is from the AMF or a session management function (Session Management Function, SMF), the UDM finds the corresponding SUPI based on the locally stored correspondence between the first identifier and the SUPI. Optionally, the UDM further finds the subscription data of the UE identified by the SUPI.

With reference to the first aspect, in a possible implementation of the first aspect, that the AUSF generates a first identifier further includes:
First, the AUSF receives a first authentication request message that is sent by the SEAF and that carries a first serving network identifier. The first authentication request message is for requesting to invoke an authentication service provided by the AUSF. Then, the AUSF generates the first identifier.

Optionally, the AUSF generates the first identifier when a first condition is satisfied. The first condition includes:
the first serving network identifier received by the AUSF includes a PLMN ID and an NID;
the first serving network identifier received by the AUSF includes a PLMN ID and an NID, and a second serving network identifier includes the PLMN ID but does not include the NID;
a visited network of the UE is an SNPN network;
a visited network of the UE is an SNPN network, and a home network of the UE is a PLMN network;
a visited network of the UE and a home network of the UE are two different networks; or
a local configuration of the AUSF indicates to generate the first identifier.

Specifically, in this embodiment of this application, the first serving network identifier is an identifier of a visited network of the UE, an identifier of a network in which the SEAF is located, an identifier of a network in which the AMF is located, or an identifier of a serving network of the UE. In an optional implementation, for example, when the visited network of the UE, the network in which the SEAF is located, the network in which the AMF is located, or the serving network of the UE is a PLMN network, the first serving network identifier is a public land network identifier (PLMN ID) of the PLMN network. When the visited network of the UE, the network in which the SEAF is located, the network in which the AMF is located, or the serving network of the UE is an SNPN network, the first serving network identifier is an identifier of the SNPN network. To be specific, in addition to including a PLMN ID, the first serving network identifier further includes a network identifier (network identifier, NID). The PLMN ID and the NID jointly identify the SNPN network. Alternatively, the first serving network identifier may be a network name of the visited network of the UE, a network name of the network in which the SEAF is located, a network name of the network in which the AMF is located, or a name of the serving network of the UE. In an optional implementation, for example, the first serving network identifier is a "5G: SN id". When the serving network of the UE, the visited network of the UE, the network in which the SEAF is located, or the network in which the AMF is located is a PLMN, the SN id is a PLMN ID of the PLMN. When the serving network of the UE, the visited network of the UE, the network in which the SEAF is located, or the network in which the AMF is located is an SNPN network, the SN id includes a PLMN ID and an NID, where the PLMN ID and the NID jointly identify the SNPN network.

In this embodiment of this application, the AMF may be referred to as an AMF serving the UE, and the SEAF may also be referred to as an SEAF serving the UE.

Specifically, the second serving network identifier is a network identifier of a home network of the UE, a network identifier of a network in which the AUSF is located, or a network identifier of a network in which the UDM is located. In an optional implementation, for example, when the home network of the UE, the network in which the AUSF is located, or the network in which the UDM is located is a PLMN network, the second serving network identifier is a PLMN ID of the PLMN network. When the home network of the UE, the network in which the AUSF is located, or the network in which the UDM is located is an SNPN network, the second serving network identifier is an identifier of the SNPN network. To be specific, the second serving network identifier includes a PLMN ID and an NID. The PLMN ID and NID jointly identify the SNPN network. Alternatively, the second serving network identifier may be a network name of the home network of the UE, a network name of the network in which the AUSF is located, or a network name of the network in which the UDM is located. In an optional implementation, for example, the second serving network identifier is "5G: SN id". When the home network of the UE, the network in which the AUSF is located, or the network in which the UDM is located is a PLMN network, the SN id is a PLMN ID of the PLMN network. When the home network of the UE, the network in which the UDM is located, or the network in which the AUSF is located is an SNPN network, the SN id includes a PLMN ID and an NID, where the PLMN ID and the NID jointly identify the SNPN network.

Optionally, the first serving network identifier is carried in a first authentication request, and the first authentication request is for requesting to invoke an authentication service provided by the AUSF. Optionally, the first authentication request is a "Nausf_UEAuthentication_Authenticate Request" message.

In this embodiment of this application, after receiving the first serving network identifier sent by the SEAF, the AUSF determines whether to generate the first identifier. When the first serving network identifier includes the PLMN ID and the NID, or another determining condition is satisfied, the AUSF generates the first identifier. The AUSF sends the first identifier to the SEAF or the visited network, so that leaking of privacy information of the terminal device is avoided. Therefore, communication security is improved.

With reference to the first aspect, in a possible implementation of the first aspect, before the SEAF generates the second intermediate key K_{AMF} based on the first intermediate key K_{SEAF}, the first identifier, and the ABBA, the method further includes:
The UDM or an authentication credential repository and processing function (Authentication credential Repository and Processing Function, ARPF) generates a third intermediate key CK and a fourth intermediate key IK based on a long term key K of the UE. The UDM or the ARPF generates a fifth intermediate key K_{AUSF} based on the third intermediate key CK and the fourth intermediate key IK. The UDM sends the fifth intermediate key K_{AUSF} to the AUSF. The AUSF generates the first intermediate key K_{SEAF} based on the fifth intermediate key K_{AUSF}. The AUSF sends the first intermediate key K_{SEAF} to the SEAF.

In this embodiment of this application, the communication method may be applied to an authentication manner: 5G authentication and key agreement (5G Authentication and Key Agreement, 5G AKA), so that implementation flexibility of a solution is improved.

With reference to the first aspect, in a possible implementation of the first aspect, before the SEAF generates the second intermediate key K_{AMF} based on the first intermediate key K_{SEAF}, the first identifier, and the ABBA, the method further includes:
The UDM or an ARPF generates a third intermediate key CK and a fourth intermediate key IK based on a long term key K of the UE. The UDM or the ARPF generates a sixth intermediate key CK' and a seventh intermediate key IK' based on the third intermediate key CK and the fourth intermediate key IK. The UDM sends the sixth intermediate key CK' and the seventh intermediate key IK' to the AUSF. The AUSF generates a fifth intermediate key K_{AUSF} based on the sixth intermediate key CK' and the seventh intermediate key IK', and generates the first intermediate key K_{SEAF} based on the fifth intermediate key K_{AUSF}. The AUSF sends the first intermediate key K_{SEAF} to the SEAF.

In this embodiment of this application, the communication method may be applied to an authentication manner: an improved extensible authentication protocol method for third generation authentication and key agreement (Improved Extensible Authentication Protocol Method for third Generation Authentication and Key Agreement, EAP-AKA'), so that implementation flexibility of a solution is improved.

With reference to the first aspect, in a possible implementation of the first aspect, that the AUSF sends the first identifier to an SEAF further includes:
The AUSF sends a third authentication service response message to the SEAF. The third authentication service response includes the first identifier. For example, the authentication service response is a "Nausf_UEAuthentication_Authenticate Response" message.

With reference to the first aspect, in a possible implementation of the first aspect, after the SEAF sends the first identifier to the access and mobility management function (Access and Mobility Management Function, AMF), the method further includes:
The AMF receives the first identifier. The AMF sends the first identifier to the SMF. For example, the AMF sends the first identifier to the SMF by using a session management context create service request. The session management context create service request is for requesting the SMF to create a session context of the UE, or requesting the SMF to create a session. For example, the session management context create service request is a "Nsmf_PDUSession_CreateSMContext Request" message.

With reference to the first aspect, in a possible implementation of the first aspect, after the AUSF generates the first identifier, the method further includes:
The AUSF sends a first indication to the AMF, where the first indication indicates to generate the first identifier;
the AMF sends a second indication to the UE based on the first indication, where the second indication indicates to generate the first identifier; and
the UE generates the first identifier based on the second indication.

According to a second aspect, an embodiment of this application proposes a communication method. The method includes: UE generates a first identifier based on an SUPI of the UE. The UE generates a second intermediate key K_{AMF} based on a first intermediate key K_{SEAF}, the first identifier, and an anti bidding down between architectures parameter ABBA. The UE generates a NAS key based on the second intermediate key K_{AMF}, where the NAS key is for protecting a NAS message.

In this embodiment of this application, the UE generates the first identifier based on the SUPI of the UE. The first identifier identifies the UE. The UE generates a series of keys based on the first identifier, and finally generates the NAS key. The NAS key is for protecting the NAS message. The UE generates the first identifier and the NAS key by using a method the same as that on a network side, and protects the NAS message by using the NAS key. This ensures normal communication between the terminal device and a network device.

With reference to the second aspect, in a possible implementation of the second aspect, before the UE generates the first identifier based on the SUPI, the method further includes:
The UE sends a registration request to an AMF.

That UE generates a first identifier based on an SUPI includes: When determining that a second condition is satisfied, the UE generates the first identifier based on the SUPI; otherwise, the UE skips generating the first identifier. The second condition includes:
a first serving network identifier includes a PLMN ID and an NID;
a first serving network identifier includes a PLMN ID and an NID, and a second serving network identifier includes the PLMN ID but does not include the NID;
a visited network of the UE is an SNPN network;
a visited network of the UE is an SNPN network, and a home network of the UE is a PLMN network;
a visited network of the UE and a home network of the UE are two different networks;
a local configuration of the UE indicates to generate the first identifier; or
the UE receives a second indication from the AMF, where the second indication indicates the UE to generate the first identifier.

In this embodiment of this application, before sending the registration request, the UE selects a serving network, and obtains a first network identifier. The UE generates the first identifier by using a method the same as that on a network side, and uses the first identifier for key derivation, to ensure normal communication between the network side and the UE.

With reference to the second aspect, in a possible implementation of the second aspect, before the UE generates the second intermediate key K_{AMF} based on the first intermediate key K_{SEAF}, the first identifier, and the anti bidding down between architectures parameter ABBA, the method further includes:
The UE obtains a third intermediate key CK and a fourth intermediate key IK. The UE generates a fifth intermediate key K_{AUSF} based on the third intermediate key CK and the fourth intermediate key IK. The UE generates the first intermediate key K_{SEAF} based on the fifth intermediate key K_{AUSF}.

In this embodiment of this application, that the UE obtains a third intermediate key CK and a fourth intermediate key IK includes:

A universal subscriber identity module (Universal Subscriber Identity Module, USIM) in the UE generates the third intermediate key CK and the fourth intermediate key IK based on a long term key of the UE. The USIM sends the third intermediate key CK and the fourth intermediate key IK to the UE.

In this embodiment of this application, the communication method may be applied to an authentication manner 5G AKA, so that implementation flexibility of a solution is improved.

With reference to the second aspect, in a possible implementation of the second aspect, before the UE generates the second intermediate key K_{AMF} based on the first intermediate key K_{SEAF}, the first identifier, and the anti bidding down between architectures parameter ABBA, the method further includes:
The UE obtains a third intermediate key CK and a fourth intermediate key IK. The UE generates a sixth intermediate key CK' and a seventh intermediate key IK' based on the third intermediate key CK and the fourth intermediate key IK. The UE generates a fifth intermediate key K_{AUSF} based on the sixth intermediate key CK' and the seventh intermediate key IK'. The UE generates the first intermediate key K_{SEAF} based on the fifth intermediate key K_{AUSF}.

In this embodiment of this application, the communication method may be applied to an authentication manner EAP-AKA', so that implementation flexibility of a solution is improved.

With reference to the second aspect, in a possible implementation of the second aspect, that the UE generates a second intermediate key K_{AMF} based on a first intermediate key K_{SEAF}, the first identifier, and an anti bidding down between architectures parameter ABBA includes:
The UE generates the second intermediate key K_{AMF} based on the first intermediate key K_{SEAF}, the first identifier, a length of the first identifier, the ABBA, and a length of the ABBA.

With reference to the second aspect, in a possible implementation of the second aspect, before the UE generates the first identifier based on the SUPI, the method further includes:
The UE receives a second indication sent by the AMF, where the second indication indicates to generate the first identifier; and
the UE generates the first identifier based on the second indication.

According to a third aspect, an embodiment of this application proposes a communication method. The method includes:
a UDM generates a first identifier based on an SUPI of a terminal device UE;
the UDM sends the first identifier to an AUSF;
the AUSF sends the first identifier to an SEAF;
the SEAF sends the first identifier to an AMF;
the SEAF generates a second intermediate key K_{AMF} based on a first intermediate key K_{SEAF}, the first identifier, and an anti bidding down between architectures parameter ABBA;
the SEAF sends the second intermediate key K_{AMF} to the AMF; and
the AMF generates a NAS key based on the second intermediate key, where the NAS key is for protecting a NAS message.

In this embodiment, the UDM generates the first identifier. The first identifier identifies the UE. A home network of the UE sends (by the UDM by using the AUSF) the first identifier to a visited network (the AMF or the SEAF) of the UE, to prevent the home network of the UE from sending (by the UDM by using the AUSF) the SUPI of the UE to the visited network (the AMF or the SEAF) of the UE. The SUPI is privacy information of the UE, so that leaking of the privacy information of the UE is avoided. Therefore, communication security is improved.

With reference to the third aspect, in a possible implementation of the third aspect, that a UDM generates a first identifier based on an SUPI of UE includes:
The AUSF receives a first authentication request message sent by the AMF, where the first authentication request message carries a first serving network identifier, and the first authentication request message is for requesting to invoke an authentication service provided by the AUSF;
the AUSF sends an authentication vector request message, where the authentication vector request message carries the first serving network identifier, and the authentication vector request message is for requesting to invoke an authentication vector service provided by the UDM, or requesting to invoke an authentication service provided by the UDM; and
the UDM generates the first identifier.

With reference to the third aspect, in a possible implementation of the third aspect, the method includes: When a third condition is satisfied, the UDM generates the first identifier based on the SUPI of the UE.

The third condition includes:
a first serving network identifier includes a PLMN ID and an NID;
a first serving network identifier includes a PLMN ID and an NID, and a second serving network identifier includes the PLMN ID but does not include the NID;
a visited network of the UE is an SNPN network;
a visited network of the UE is an SNPN network, and a home network of the UE is a PLMN network;
a visited network of the UE and a home network of the UE are two different networks; or
a local configuration of the UDM indicates to generate the first identifier.

In this embodiment of this application, that the visited network of the UE and the home network of the UE are two different networks means that the visited network of the UE is an SNPN and the home network of the UE is a PLMN, or that the visited network of the UE is a PLMN and the home network of the UE is an SNPN.

With reference to the third aspect, in a possible implementation of the third aspect, after the UDM generates the first identifier, the method further includes:
The UDM stores a correspondence between the first identifier and the SUPI.

With reference to the third aspect, in a possible implementation of the third aspect, before the SEAF generates the second intermediate key K_{AMF} based on the first intermediate key K_{SEAF}, the first identifier, and the ABBA, the method further includes:

The UDM or an ARPF generates a third intermediate key CK and a fourth intermediate key IK based on a long term key K of the UE;
the UDM generates a fifth intermediate key K_{AUSF} based on the third intermediate key CK and the fourth intermediate key IK;
the UDM sends the fifth intermediate key K_{AUSF} to the AUSF;
the AUSF generates the first intermediate key K_{SEAF} based on the fifth intermediate key K_{AUSF}; and
the AUSF sends the first intermediate key K_{SEAF} to the SEAF.

With reference to the third aspect, in a possible implementation of the third aspect, before the SEAF generates the second intermediate key K_{AMF} based on the first intermediate key K_{SEAF}, the first identifier, and the ABBA, the method further includes:
The UDM generates a third intermediate key CK and a fourth intermediate key IK based on a long term key K of the UE;
the UDM generates a sixth intermediate key CK' and a seventh intermediate key IK' based on the third intermediate key CK and the fourth intermediate key IK;
the UDM sends the sixth intermediate key CK' and the seventh intermediate key IK' to the AUSF;
the AUSF generates a fifth intermediate key K_{AUSF} based on the sixth intermediate key CK' and the seventh intermediate key IK', and generates the first intermediate key K_{SEAF} based on the fifth intermediate key K_{AUSF}; and
the AUSF sends the first intermediate key K_{SEAF} to the SEAF.

With reference to the third aspect, in a possible implementation of the third aspect, after the UDM generates the first identifier, the method further includes:
The UDM receives, from the AMF or an SMF, a service request carrying the first identifier; and
the UDM finds the corresponding SUPI based on the first identifier. Optionally, the UDM finds subscription data of the UE identified by the SUPI.

According to a fourth aspect, an embodiment of this application proposes a communication method. The method includes:
A UDM is configured with an authentication manner supported by a first protocol network;
the UDM receives a first serving network identifier sent by an AUSF;
the UDM selects authentication manneran authentication manner based on the first serving network identifier and the locally configured authentication manner supported by the first protocol network; and
the UDM sends the selected authentication manner to the AUSF.

It should be noted that, in this embodiment of this application, the first protocol network is any network that can interwork with a network in which the UDM is located. For example, the first protocol network is a visited network of UE, a serving network of the UE, a network in which an AMF serving the UE is located, or a network in which an SEAF serving the UE is located. The authentication manner supported by the first protocol network is also referred to as an authentication manner supported by the AMF or the SEAF that serves the UE, an authentication manner supported by the visited network of the UE, or an authentication manner supported by the serving network of the UE.

With reference to the fourth aspect, in a possible implementation of the fourth aspect, that the UDM receives a first serving network identifier sent by an AUSF includes:
The AUSF sends, to the UDM, an authentication vector request message carrying the first serving network identifier, where the authentication vector request message is for requesting to invoke an authentication vector service or an authentication service that is provided by the UDM.

With reference to the fourth aspect, in a possible implementation of the fourth aspect, that the UDM sends the selected authentication manner to the AUSF includes:
The UDM sends an authentication vector response message to the AUSF, where the authentication vector response message carries the selected authentication manner. The authentication vector response message is for responding to the received authentication vector request message.

In this embodiment of this application, the UDM is preconfigured with the authentication manner supported by the first protocol network. After receiving the first serving network identifier from the AUSF, the UDM may select the authentication manner based on the first serving network identifier and the locally configured authentication manner supported by the first protocol network, so that a result that authentication fails because the home network (the UDM) selects an authentication method that is not supported by the visited network (or the AMF or the SEAF) is avoided.

According to a fifth aspect, an embodiment of this application proposes a communication method. The method includes:
A UDM receives a first authentication manner sent by an AUSF;
the UDM selects authentication manneran authentication manner based on the received first authentication manner; and
the UDM sends the selected authentication manner to the AUSF.

With reference to the fifth aspect, in a possible implementation of the fifth aspect, that a UDM receives a first authentication manner sent by an AUSF includes:
The AUSF sends an authentication vector request message to the UDM, where the authentication vector request message is for requesting to invoke an authentication vector service or an authentication service that is provided by the UDM, and the authentication vector request message carries the first authentication manner.

With reference to the fifth aspect, in a possible implementation of the fifth aspect, that the UDM sends the selected authentication manner to the AUSF includes:
The UDM sends an authentication vector response message to the AUSF, where the authentication vector response message carries the selected authentication manner. The authentication vector response message is for responding to the received authentication vector request message.

With reference to the fifth aspect, in a possible implementation of the fifth aspect, before the UDM receives the first authentication manner sent by the AUSF, the method includes:
The AUSF receives the first authentication manner sent by an SEAF.

For example, the AUSF receives a first authentication request message sent by the SEAF. The first authentication request message is for requesting to invoke an authentication service provided by the AUSF. The first authentication request message carries the first authentication manner. The first authentication manner is an authentication manner supported by the SEAF, an authentication manner supported by a serving network of UE, or an authentication manner supported by a visited network of the UE.

According to a sixth aspect, an embodiment of this application proposes a communication apparatus. The communication apparatus includes:
a transceiver module, configured to receive a subscription permanent identifier SUPI of a terminal device that is sent by unified data management UDM, where the SUPI identifies the UE; and
a processing module, configured to generate a first identifier based on the SUPI.

The transceiver module is further configured to send the first identifier to a security anchor function SEAF.

The processing module is further configured to generate a second intermediate key K_{AMF} based on a first intermediate key K_{SEAF}, the first identifier, and an anti bidding down between architectures parameter ABBA.

The transceiver module is further configured to send the second intermediate key K_{AMF} to an access and mobility management function AMF.

The processing module is further configured to generate a non-access stratum NAS key based on the second intermediate key K_{AMF}, where the NAS key is for protecting a NAS message.

With reference to the sixth aspect, in a possible implementation of the sixth aspect, the transceiver module is further configured to send the first identifier to the UDM; and
the transceiver module is further configured to receive the first identifier, and store a correspondence between the first identifier and the SUPI.

With reference to the sixth aspect, in a possible implementation of the sixth aspect,
the transceiver module is further configured to receive a first serving network identifier sent by the AMF; and
that a processing module, configured to generate a first identifier specifically includes:
   the processing module is configured to generate the first identifier when the first serving network identifier includes a public land mobile network identifier PLMN ID and a network identifier NID; or
   the processing module is configured to generate the first identifier when the first serving network identifier includes a PLMN ID and an NID, and an identifier of a network in which an authentication server module function AUSF is located includes the PLMN ID but does not include the NID.

With reference to the sixth aspect, in a possible implementation of the sixth aspect,
the processing module is further configured to generate a third intermediate key CK and a fourth intermediate key IK based on a long term key K of the UE;
the processing module is further configured to generate a fifth intermediate key K_{AUSF} based on the third intermediate key CK and the fourth intermediate key IK;
the transceiver module is further configured to send the fifth intermediate key K_{AUSF} to the AUSF;
the processing module is further configured to generate the first intermediate key K_{SEAF} based on the fifth intermediate key K_{AUSF}; and
the processing module is further configured to send the first intermediate key K_{SEAF} to the SEAF.

With reference to the sixth aspect, in a possible implementation of the sixth aspect,
the processing module is further configured to generate a third intermediate key CK and a fourth intermediate key IK based on a long term key K of the UE;
the processing module is further configured to generate a sixth intermediate key CK' and a seventh intermediate key IK' based on the third intermediate key CK and the fourth intermediate key IK;
the transceiver module is further configured to send the sixth intermediate key CK' and the seventh intermediate key IK' to the AUSF;
the processing module is further configured to generate a fifth intermediate key K_{AUSF} based on the sixth intermediate key CK' and the seventh intermediate key IK', and generate the first intermediate key K_{SEAF} based on the fifth intermediate key K_{AUSF}; and
the transceiver module is further configured to send the first intermediate key K_{SEAF} to the SEAF.

With reference to the sixth aspect, in a possible implementation of the sixth aspect,
the transceiver module is further configured to receive an authentication manner that is sent by the AMF and that is supported by the AMF;
the transceiver module is further configured to send, to the UDM, the received authentication manner that is supported by the AMF;
the processing module is further configured to select authentication manneran authentication manner based on the authentication manner that is supported by the AMF;
the transceiver module is further configured to send the selected authentication manner to the AUSF; and
the transceiver module is further configured to send an authentication response to the AMF based on the selected authentication manner.

According to a seventh aspect, an embodiment of this application proposes a communication apparatus. The communication apparatus includes:
a processing module, configured to generate a first identifier based on a subscription permanent identifier SUPI of a terminal device.

The processing module is further configured to generate a second intermediate key K_{AMF} based on a first intermediate key K_{SEAF}, the first identifier, and an anti bidding down between architectures parameter ABBA.

The processing module is further configured to generate a NAS key based on the second intermediate key K_{AMF}, where the NAS key is for protecting a NAS message.

With reference to the seventh aspect, in a possible implementation of the seventh aspect,
a transceiver module, configured to send a registration request to an access and mobility management function AMF, where the registration request carries a first serving network identifier.

That a processing module, configured to generate a first identifier based on an SUPI specifically includes:
when determining that a second condition is satisfied, the processing module generates the first identifier based on the SUPI; otherwise, the UE does not generate the first identifier. The second condition includes:
the first serving network identifier includes a PLMN ID and an NID;
the first serving network identifier includes a PLMN ID and an NID, and a second serving network identifier includes the PLMN ID but does not include the NID;
a visited network of the UE is an SNPN network;
a visited network of the UE is an SNPN network, and a home network of the UE is a PLMN network;
a visited network of the UE and a home network of the UE are two different networks; or
a local configuration of the UE indicates to generate the first identifier; or
the UE receives a second indication from the AMF, where the second indication indicates the UE to generate the first identifier.

With reference to the seventh aspect, in a possible implementation of the seventh aspect,
the transceiver module is further configured to obtain a third intermediate key CK and a fourth intermediate key IK;
the processing module is further configured to generate a fifth intermediate key K_{AUSF} based on the third intermediate key CK and the fourth intermediate key IK; and
the processing module is further configured to generate the first intermediate key K_{SEAF} based on the fifth intermediate key K_{AUSF}.

With reference to the seventh aspect, in a possible implementation of the seventh aspect,
the transceiver module is further configured to obtain a third intermediate key CK and a fourth intermediate key IK;
the processing module is further configured to generate a sixth intermediate key CK' and a seventh intermediate key IK' based on the third intermediate key CK and the fourth intermediate key IK;
the processing module is further configured to generate a fifth intermediate key K_{AUSF} based on the sixth intermediate key CK' and the seventh intermediate key IK'; and
the processing module is further configured to generate the first intermediate key K_{SEAF} based on the fifth intermediate key K_{AUSF}.

With reference to the seventh aspect, in a possible implementation of the seventh aspect,
the processing module is further configured to generate the second intermediate key K_{AMF} based on the first intermediate key K_{SEAF}, the first identifier, a length of the first identifier, the ABBA, and a length of the ABBA.

According to an eighth aspect, an embodiment of this application proposes a communication apparatus. The communication apparatus includes:
a processing module, configured to generate a first identifier based on an SUPI; and
a transceiver module, configured to send the first identifier to an authentication server function network element AUSF.

The transceiver module is further configured to send the first identifier to a security anchor function network element SEAF.

The transceiver module is further configured to send the first identifier to a mobility management function network element AMF.

The processing module is further configured to generate a second intermediate key K_{AMF} based on a first intermediate key K_{SEAF}, the first identifier, and an anti bidding down between architectures parameter ABBA.

The transceiver module is further configured to send the second intermediate key to the mobility management function network element AMF.

The processing module is further configured to generate a non-access stratum NAS key based on the second intermediate key, where the NAS key is for protecting a NAS message.

With reference to the eighth aspect, in a possible implementation of the eighth aspect,
the transceiver module is further configured to receive a first serving network identifier sent by the AMF; and
the transceiver module is further configured to send the first serving network identifier to a UDM.

That a processing module, configured to generate a first identifier specifically includes:
when a third condition is satisfied, the processing module is configured to generate the first identifier based on the SUPI of UE. The third condition includes:
the first serving network identifier includes a PLMN ID and an NID;
the first serving network identifier includes a PLMN ID and an NID, and a second serving network identifier includes the PLMN ID but does not include the NID;
a visited network of the UE is an SNPN network;
a visited network of the UE is an SNPN network, and a home network of the UE is a PLMN network;
a visited network of the UE and a home network of the UE are two different networks; or
a local configuration of the UDM indicates to generate the first identifier.

With reference to the eighth aspect, in a possible implementation of the eighth aspect,
the processing module is further configured to store a correspondence between the first identifier and the SUPI.

With reference to the eighth aspect, in a possible implementation of the eighth aspect,
the processing module is further configured to generate a third intermediate key CK and a fourth intermediate key IK based on a long term key K of the UE;
the processing module is further configured to generate a fifth intermediate key K_{AUSF} based on the third intermediate key CK and the fourth intermediate key IK;
the transceiver module is further configured to send the fifth intermediate key K_{AUSF} to the AUSF;
the processing module is further configured to generate the first intermediate key K_{SEAF} based on the fifth intermediate key K_{AUSF}; and
the transceiver module is further configured to send the first intermediate key K_{SEAF} to the SEAF.

With reference to the eighth aspect, in a possible implementation of the eighth aspect,
the processing module is further configured to generate a third intermediate key CK and a fourth intermediate key IK based on a long term key K of the UE;
the processing module is further configured to generate a sixth intermediate key CK' and a seventh intermediate key IK' based on the third intermediate key CK and the fourth intermediate key IK;
the transceiver module is further configured to send the sixth intermediate key CK' and the seventh intermediate key IK' to the AUSF;
the processing module is further configured to generate a fifth intermediate key K_{AUSF} based on the sixth intermediate key CK' and the seventh intermediate key IK', and generate the first intermediate key K_{SEAF} based on the fifth intermediate key K_{AUSF}; and
the transceiver module is further configured to send the first intermediate key K_{SEAF} to the SEAF.

According to a ninth aspect, an embodiment of this application proposes a communication apparatus. The communication apparatus includes:
a transceiver module, configured to be configured with an authentication manner supported by a first protocol network, where
the transceiver module is further configured to receive a first serving network identifier sent by an authentication server function network element AUSF; and
a processing module, configured to select authentication manneran authentication manner based on the first serving network identifier and the locally configured authentication manner supported by the first protocol network, where
the transceiver module is further configured to send the selected authentication manner to the AUSF.

With reference to the ninth aspect, in a possible implementation of the ninth aspect,
the transceiver module is further configured to send, to a UDM, an authentication vector request message carrying the first serving network identifier, where the authentication vector request message is for requesting to invoke an authentication vector service or an authentication service that is provided by the UDM.

With reference to the ninth aspect, in a possible implementation of the ninth aspect,
the transceiver module is further configured to send an authentication vector response message to the AUSF, where the authentication vector response message carries the selected authentication manner. The authentication vector response message is for responding to the received authentication vector request message.

According to a tenth aspect, an embodiment of this application proposes a communication apparatus. The communication apparatus includes:
a transceiver module, configured to receive a first authentication manner sent by an AUSF; and
a processing module, configured to select authentication manneran authentication manner based on the received first authentication manner, where
the transceiver module is further configured to send the selected authentication manner to the AUSF.

With reference to the tenth aspect, in a possible implementation of the tenth aspect, the communication apparatus may include:
the transceiver module is further configured to send an authentication vector request message to a UDM, where the authentication vector request message is for requesting to invoke an authentication vector service or an authentication service that is provided by the UDM, and the authentication vector request message carries the first authentication manner.

With reference to the tenth aspect, in a possible implementation of the tenth aspect, the communication apparatus may include:
the transceiver module is further configured to send an authentication vector response message to the AUSF, where the authentication vector response message carries the selected authentication manner. The authentication vector response message is for responding to the received authentication vector request message.

With reference to the tenth aspect, in a possible implementation of the tenth aspect, the communication apparatus may include:
the transceiver module is further configured to receive the first authentication manner sent by an SEAF.

According to an eleventh aspect, an embodiment of this application provides a network device. The network device includes:
a transceiver, configured to receive a subscription permanent identifier SUPI of a terminal device that is sent by unified data management UDM, where the SUPI identifies the UE; and
a processor, configured to generate a first identifier based on the SUPI.

The transceiver is further configured to send the first identifier to a security anchor function SEAF.

The processor is further configured to generate a second intermediate key K_{AMF} based on a first intermediate key K_{SEAF}, the first identifier, and an anti bidding down between architectures parameter ABBA.

The transceiver is further configured to send the second intermediate key K_{AMF} to an access and mobility management function AMF.

The processing is further configured to generate a non-access stratum NAS key based on the second intermediate key K_{AMF}, where the NAS key is for protecting a NAS message.

With reference to the eleventh aspect, in a possible implementation of the eleventh aspect,
the transceiver is further configured to send the first identifier to the UDM; and
the transceiver is further configured to receive the first identifier, and store a correspondence between the first identifier and the SUPI.

With reference to the eleventh aspect, in a possible implementation of the eleventh aspect,
the transceiver is further configured to receive a first serving network identifier sent by the AMF; and
that a processor, configured to generate a first identifier specifically includes:
   the processor is configured to generate the first identifier when the first serving network identifier includes a public land mobile network identifier PLMN ID and a network identifier NID; or
   the processor is configured to generate the first identifier when the first serving network identifier includes a PLMN ID and an NID, and an identifier of a network in which an authentication server function AUSF is located includes the PLMN ID but does not include the NID.

With reference to the eleventh aspect, in a possible implementation of the eleventh aspect,
the processor is further configured to generate a third intermediate key CK and a fourth intermediate key IK based on a long term key K of the UE;
the processor is further configured to generate a fifth intermediate key K_{AUSF} based on the third intermediate key CK and the fourth intermediate key IK;
the transceiver is further configured to send the fifth intermediate key K_{AUSF} to the AUSF;
the processor is further configured to generate the first intermediate key K_{SEAF} based on the fifth intermediate key K_{AUSF}; and
the processor is further configured to send the first intermediate key K_{SEAF} to the SEAF.

With reference to the eleventh aspect, in a possible implementation of the eleventh aspect,
the processor is further configured to generate a third intermediate key CK and a fourth intermediate key IK based on a long term key K of the UE;
the processor is further configured to generate a sixth intermediate key CK' and a seventh intermediate key IK' based on the third intermediate key CK and the fourth intermediate key IK;
the transceiver is further configured to send the sixth intermediate key CK' and the seventh intermediate key IK' to the AUSF;
the processor is further configured to generate a fifth intermediate key K_{AUSF} based on the sixth intermediate key CK' and the seventh intermediate key IK', and generate the first intermediate key K_{SEAF} based on the fifth intermediate key K_{AUSF}; and
the transceiver is further configured to send the first intermediate key K_{SEAF} to the SEAF.

With reference to the eleventh aspect, in a possible implementation of the eleventh aspect,
the transceiver is further configured to receive an authentication manner that is sent by the AMF and that is supported by the AMF;
the transceiver is further configured to send, to the UDM, the received authentication manner that is supported by the AMF;
the processor is further configured to select authentication manneran authentication manner based on the authentication manner that is supported by the AMF;
the transceiver is further configured to send the selected authentication manner to the AUSF; and
the transceiver is further configured to send an authentication response to the AMF based on the selected authentication manner.

According to a twelfth aspect, an embodiment of this application provides a terminal device. The terminal device includes:
a processor, further configured to generate a first identifier based on a subscription permanent identifier SUPI of the terminal device.

The processor is further configured to generate a second intermediate key K_{AMF} based on a first intermediate key K_{SEAF}, the first identifier, and an anti bidding down between architectures parameter ABBA.

The processor is further configured to generate a NAS key based on the second intermediate key K_{AMF}, where the NAS key is for protecting a NAS message.

With reference to the twelfth aspect, in a possible implementation of the twelfth aspect, the terminal device further includes a transceiver.

The transceiver is further configured to send a registration request to an access and mobility management function AMF, where the registration request carries a first serving network identifier.

That a processor, configured to generate a first identifier based on an SUPI specifically includes:
when determining that a second condition is satisfied, the processor generates the first identifier based on the SUPI; otherwise, the processor does not generate the first identifier. The second condition includes:
a first serving network identifier includes a PLMN ID and an NID;
a first serving network identifier includes a PLMN ID and an NID, and a second serving network identifier includes the PLMN ID but does not include the NID;
a visited network of the UE is an SNPN network;
a visited network of the UE is an SNPN network, and a home network of the UE is a PLMN network;
a visited network of the UE and a home network of the UE are two different networks; or
a local configuration of the UE indicates to generate the first identifier; or
the UE receives a second indication from the AMF, where the second indication indicates the UE to generate the first identifier.

With reference to the twelfth aspect, in a possible implementation of the twelfth aspect,
the transceiver is further configured to obtain a third intermediate key CK and a fourth intermediate key IK;
the processor is further configured to generate a fifth intermediate key K_{AUSF} based on the third intermediate key CK and the fourth intermediate key IK; and
the processor is further configured to generate the first intermediate key K_{SEAF} based on the fifth intermediate key K_{AUSF}.

With reference to the twelfth aspect, in a possible implementation of the twelfth aspect,
the transceiver is further configured to obtain a third intermediate key CK and a fourth intermediate key IK;
the processor is further configured to generate a sixth intermediate key CK' and a seventh intermediate key IK' based on the third intermediate key CK and the fourth intermediate key IK;
the processor is further configured to generate a fifth intermediate key K_{AUSF} based on the sixth intermediate key CK' and the seventh intermediate key IK'; and
the processor is further configured to generate the first intermediate key K_{SEAF} based on the fifth intermediate key K_{AUSF}.

With reference to the twelfth aspect, in a possible implementation of the twelfth aspect,
the processor is further configured to generate the second intermediate key K_{AMF} based on the first intermediate key K_{SEAF}, the first identifier, a length of the first identifier, the ABBA, and a length of the ABBA.

According to a thirteenth aspect, an embodiment of this application provides a network device. The network device includes:
a processor, configured to generate a first identifier based on an SUPI; and
a transceiver, configured to send the first identifier to an authentication server function network element AUSF.

The transceiver is further configured to send the first identifier to a security anchor function network element SEAF.

The processor is further configured to generate a second intermediate key K_{AMF} based on a first intermediate key K_{SEAF}, the first identifier, and an anti bidding down between architectures parameter ABBA.

The transceiver is further configured to send the second intermediate key to a mobility management function network element AMF.

The processor is further configured to generate a non-access stratum NAS key based on the second intermediate key, where the NAS key is for protecting a NAS message.

With reference to the thirteenth aspect, in a possible implementation of the thirteenth aspect,
the transceiver is further configured to receive a first serving network identifier sent by the AMF; and
the transceiver is further configured to send the first serving network identifier to a UDM.

That a processor, configured to generate a first identifier specifically includes:
when a third condition is satisfied, the processor is configured to generate the first identifier based on the SUPI of UE. The third condition includes:
a first serving network identifier includes a PLMN ID and an NID;
a first serving network identifier includes a PLMN ID and an NID, and a second serving network identifier includes the PLMN ID but does not include the NID;
a visited network of the UE is an SNPN network;
a visited network of the UE is an SNPN network, and a home network of the UE is a PLMN network;
a visited network of the UE and a home network of the UE are two different networks; or
a local configuration of the UDM indicates to generate the first identifier.

With reference to the thirteenth aspect, in a possible implementation of the thirteenth aspect,
the processor is further configured to store a correspondence between the first identifier and the SUPI.

With reference to the thirteenth aspect, in a possible implementation of the thirteenth aspect,
the processor is further configured to generate a third intermediate key CK and a fourth intermediate key IK based on a long term key K of the UE;
the processor is further configured to generate a fifth intermediate key K_{AUSF} based on the third intermediate key CK and the fourth intermediate key IK;
the transceiver is further configured to send the fifth intermediate key K_{AUSF} to the AUSF;
the processor is further configured to generate the first intermediate key K_{SEAF} based on the fifth intermediate key K_{AUSF}; and
the transceiver is further configured to send the first intermediate key K_{SEAF} to the SEAF.

With reference to the thirteenth aspect, in a possible implementation of the thirteenth aspect,
the processor is further configured to generate a third intermediate key CK and a fourth intermediate key IK based on a long term key K of the UE;
the processor is further configured to generate a sixth intermediate key CK' and a seventh intermediate key IK' based on the third intermediate key CK and the fourth intermediate key IK;
the transceiver is further configured to send the sixth intermediate key CK' and the seventh intermediate key IK' to the AUSF;
the processor is further configured to generate a fifth intermediate key K_{AUSF} based on the sixth intermediate key CK' and the seventh intermediate key IK', and generate the first intermediate key K_{SEAF} based on the fifth intermediate key K_{AUSF}; and
the transceiver is further configured to send the first intermediate key K_{SEAF} to the SEAF.

According to a fourteenth aspect, an embodiment of this application provides a network device. The network device includes:
a transceiver, configured to be configured with an authentication manner supported by a first protocol network, where
the transceiver is further configured to receive a first serving network identifier sent by an authentication server function network element AUSF; and
a processor, configured to select authentication manneran authentication manner based on the first serving network identifier and the locally configured authentication manner supported by the first protocol network, where
the transceiver is further configured to send the selected authentication manner to the AUSF.

With reference to the fourteenth aspect, in a possible implementation of the fourteenth aspect,
the transceiver is further configured to send, to a UDM, an authentication vector request message carrying the first serving network identifier, where the authentication vector request message is for requesting to invoke an authentication vector service or an authentication service that is provided by the UDM.

With reference to the fourteenth aspect, in a possible implementation of the fourteenth aspect,
the transceiver is further configured to send an authentication vector response message to the AUSF, where the authentication vector response message carries the selected authentication manner. The authentication vector response message is for responding to the received authentication vector request message.

According to a fifteenth aspect, an embodiment of this application provides a network device. The network device includes:
a transceiver module, configured to receive a first authentication manner sent by an AUSF; and
a processing module, configured to select authentication manneran authentication manner based on the received first authentication manner, where
the transceiver module is further configured to send the selected authentication manner to the AUSF.

With reference to the fifteenth aspect, in a possible implementation of the fifteenth aspect, the network device may include:
the transceiver is further configured to send an authentication vector request message to a UDM, where the authentication vector request message is for requesting to invoke an authentication vector service or an authentication service that is provided by the UDM, and the authentication vector request message carries the first authentication manner.

With reference to the fifteenth aspect, in a possible implementation of the fifteenth aspect, the network device may include:
the transceiver is further configured to send an authentication vector response message to the AUSF, where the authentication vector response message carries the selected authentication manner. The authentication vector response message is for responding to the received authentication vector request message.

With reference to the fifteenth aspect, in a possible implementation of the fifteenth aspect, the network device may include:
the transceiver is further configured to receive the first authentication manner sent by an SEAF.

According to a sixteenth aspect, an embodiment of this application provides a communication apparatus. The communication apparatus may implement a function performed by the AUSF, the UDM, the AMF (or the SEAF), or the terminal device in the method according to the first aspect, the second aspect, the third aspect, the fourth aspect, or the fifth aspect. The communication apparatus includes a processor, a memory, and a transceiver connected to the processor. The memory is configured to store program code, and transmit the program code to the processor. The processor is configured to drive, based on instructions in the program code, the transceiver to perform the method according to the first aspect, the second aspect, the third aspect, the fourth aspect, or the fifth aspect. A receiver and a transmitter are separately connected to the processor, to perform an operation of the AUSF, the UDM, the AMF (or the SEAF), or the terminal device in the methods in the foregoing aspects. Specifically, the transceiver may be a radio frequency circuit, and the radio frequency circuit receives and sends a message by using an antenna. Alternatively, the transceiver may be a communication interface. The processor is connected to the communication interface by using a bus, and the processor receives or sends a message through the communication interface.

According to a seventeenth aspect, an embodiment of this application provides a communication apparatus. The communication apparatus may include an entity such as a network device, a terminal device, or a chip. The communication apparatus includes a processor and a memory. The memory is configured to store instructions. The processor is configured to execute the instructions in the memory, to enable the communication apparatus to perform the method according to any one of the possible implementations of the first aspect, the second aspect, the third aspect, the fourth aspect, or the fifth aspect.

According to an eighteenth aspect, an embodiment of this application provides a computer-readable storage medium storing one or more computer executable instructions. When the computer executable instructions are executed by a processor, the processor performs the method according to any one of the possible implementations of the first aspect, the second aspect, the third aspect, or the fourth aspect.

According to a nineteenth aspect, an embodiment of this application provides a computer program product (which is also referred to as a computer program) storing one or more computer executable instructions. When the computer executable instructions are executed by a processor, the processor performs the method according to any one of the possible implementations of the first aspect, the second aspect, the third aspect, the fourth aspect, or the fifth aspect.

According to a twentieth aspect, this application provides a chip system. The chip system includes a processor, configured to support a computer device in implementing functions in the foregoing aspects. In a possible design, the chip system further includes a memory. The memory is configured to store program instructions and data that are necessary for the computer device. The chip system may include a chip, or may include a chip and another discrete component.

According to a twenty-first aspect, this application provides a communication system. The communication system includes the network device in the tenth aspect, the twelfth aspect, the thirteenth aspect, or the fourteenth aspect, and/or the terminal device in the eleventh aspect.

### BRIEF DESCRIPTION OF DRAWINGS

FIG. 1a is a schematic diagram of a 5G communication system according to an embodiment of this application;
FIG. 1b is a schematic diagram of a key architecture of a 5th generation mobile communication system;
FIG. 1c is a schematic flowchart of 5G authentication according to an embodiment of this application;
FIG. 2 is a schematic diagram of a hardware structure of a communication apparatus according to an embodiment of this application;
FIG. 3 is a schematic diagram of an embodiment of a communication method according to an embodiment of this application;
FIG. 4 is a schematic diagram of an embodiment of another communication method according to an embodiment of this application;
FIG. 5 is a schematic diagram of an embodiment of another communication method according to an embodiment of this application;
FIG. 6 is a schematic diagram of an embodiment of another communication method according to an embodiment of this application;
FIG. 7 is a schematic diagram of an embodiment of a communication apparatus according to an embodiment of this application;
FIG. 8 is a schematic diagram of another embodiment of a communication apparatus according to an embodiment of this application;
FIG. 9 is a schematic diagram of an embodiment of a communication apparatus according to an embodiment of this application;
FIG. 10 is a schematic diagram of an embodiment of a communication apparatus according to an embodiment of this application; and
FIG. 11 is a schematic diagram of an embodiment of a communication apparatus according to an embodiment of this application.

### DESCRIPTION OF EMBODIMENTS

In the specification, claims, and accompanying drawings of this application, the terms "first", "second", and the like are intended to distinguish between similar objects but do not necessarily indicate a specific order or sequence. It should be understood that the terms used in such a way are interchangeable in proper circumstances, which is merely a discrimination manner that is used when objects having a same attribute are described in embodiments of this application. In addition, the terms "include", "contain" and any other variants mean to cover the non-exclusive inclusion, so that a process, method, system, product, or device that includes a series of units is not necessarily limited to those units, but may include other units not expressly listed or inherent to such a process, method, system, product, or device.

The following clearly describes the technical solutions in embodiments of this application with reference to the accompanying drawings in embodiments of this application. In descriptions of this application, "/" means "or" unless otherwise specified. For example, A/B may represent A or B. In this application, "and/or" describes only a correspondence relationship for describing associated objects and represents that three relationships may exist. For example, A and/or B may represent the following three cases: Only A exists, both A and B exist, and only B exists. In addition, in the descriptions of this application, "at least one item" means one or more items, and "a plurality of items" means two or more items. "At least one item (piece) of the following" or a similar expression thereof means any combination of these items, including a singular item (piece) or any combination of plural items (pieces). For example, at least one of a, b, or c may indicate: a; b; c; a and b; a and c; b and c; or a, b, and c; where a, b, and c may be singular or plural.

In this application, that a network function (for example, an access and mobility management function, a security anchor function, a unified data management function, or an authentication server function) or a terminal device UE generates B based on A may indicate that the network function generates B after receiving A, or that the network function generates B by using A as a parameter. That the network function generates B after receiving A may be that the network function generates B at any moment after receiving A. When the network function generates B by using A as a parameter, it indicates that a parameter used when the network function generate B includes A, or may include a parameter other than A. In this application, that the network function generates B based on A indicates that a parameter used when the network function generate B includes A, or may include a parameter other than A.

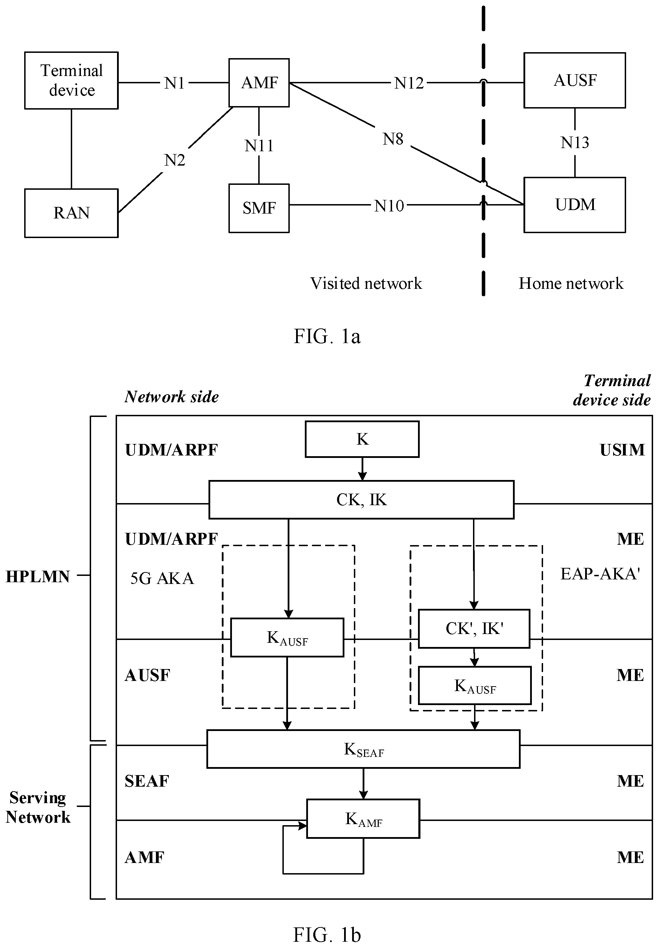

FIG. 1a is a schematic diagram of a 5G communication system according to an embodiment of this application. In a 5G mobile network architecture, a control plane function and a forwarding plane function of a mobile gateway are decoupled, and the control plane function obtained through separation, a conventional control network element mobility management entity (mobility management entity, MME) in the 3rd generation partnership project (3rd generation partnership project, 3GPP), and the like are combined into a unified control plane (control plane) function. A user plane function (User plane function, UPF) can implement user plane functions (SGW-U and PGW-U) of a serving gateway (serving gateway, SGW) and a packet data network gateway (packet data network gateway, PGW). Further, the unified control plane function may be decomposed into an access and mobility management function (access and mobility management function, AMF) and a session management function (session management function, SMF).

As shown in FIG. 1a, the communication system includes at least a terminal device, which is also referred to as user equipment (user equipment, UE), an access and mobility management function AMF, an authentication server function (authentication server function, AUSF), a unified data management (unified data management, UDM) function, a radio access network (Radio Access Network, RAN) network element, and a session management function (Session Management Function, SMF).

It should be noted that interaction between the UE and the AMF is performed by using a RAN. To be specific, in this embodiment of this application, a message sent by the UE to the AMF means that the UE sends the message to the RAN, and the RAN sends the message to the AMF. A message sent by the AMF to the UE means that the AMF sends the message to the RAN, and the RAN sends the message to the UE.

Specifically, the UE communicates with the AMF through an N1 interface; the AMF communicates with the AUSF through an N12 interface; the AMF communicates with the UDM through an N8 interface; the AUSF communicates with the UDM through an N13 interface; and the AMF communicates with the SMF through an N11 interface.

The terminal device in this system is not limited to a 5G network, and includes a mobile phone, an internet of things device, a smart household device, an industrial control device, a vehicle device, and the like. In embodiments of this application, the terminal device is various terminal devices or apparatuses having a wire communication function, for example, a mobile phone (which is also referred to as a "cellular" phone) and a computer having a mobile terminal, or may be a portable, pocket-sized, handheld, computer built-in, or vehicle-mounted mobile apparatus, which exchange language and/or data with the radio access network. For example, the terminal device is a device such as a personal communications service (personal communications service, PCS) phone, a cordless phone, a session initiation protocol (SIP) phone, a wireless local loop (wireless local loop, WLL) station, or a personal digital assistant (personal digital assistant, PDA). The communication apparatus may also be referred to as a system, a subscriber unit (subscriber unit), a subscriber station (subscriber station), a mobile station (mobile station), a mobile terminal (mobile), a remote station (remote station), an access point (access point), a remote terminal (remote terminal), an access terminal (access terminal), a user terminal (user terminal), a user agent (user agent), a user device (user device), or user equipment (user equipment, UE). For example, the communication apparatus is a vehicle, a vehicle-mounted device, a vehicle-mounted module or unit, a drive test infrastructure device, a handheld device, a wearable device, a computing device, or another processing device connected to a wireless modem, for example, vehicular user equipment (vehicular user equipment, VUE) or air conditioner user equipment.

A main function of the RAN is to control a user to wirelessly access a mobile communication network. The RAN is a part of a mobile communication system. The RAN implements a radio access technology. Conceptually, the RAN resides in a device (such as a mobile phone, a computer, or any remote control machine) and provides a connection to a core network thereof. The RAN device includes but is not limited to: a (gNodeB, gNB) in 5G, an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (Baseband Unit, BBU), a transmission reception point (transmission reception point, TRP), a transmission point (transmission point, TP), a mobile switching center, and the like. In addition, the RAN device may further include a wireless fidelity (wireless fidelity, Wi-Fi) access point (access point, AP), and the like.

The AMF network element in the system may be responsible for registration, mobility management, a tracking area update procedure, and the like of the terminal device. The AMF network element may also be referred to as an AMF device or an AMF entity.

The AUSF network element in this system can provide authentication control for the user equipment.

The UDM network element in this system can store subscription data of a user. For example, the subscription data of the user includes subscription data related to mobility management and subscription data related to session management. The UDM network element may also be referred to as a UDM device or a UDM entity.

The system further includes an SMF that may be responsible for session management of the terminal device. For example, the session management includes user plane device selection, user plane device reselection, IP address allocation, quality of service (quality of service, QoS) control, and session establishment, modification, or release.

Optionally, the 5G communication system further includes a radio access network (radio access network, RAN) device. The RAN device is an apparatus configured to provide a wireless communication function for the terminal device. The RAN device may include base stations in various forms, for example, a macro base station, a micro base station (which is also referred to as a small cell), a relay station, and an access point. In systems using different radio access technologies, a device having a function of the base station may be named differently. For example, the device is referred to as an evolved NodeB (evolved NodeB, eNB or eNodeB) in an LTE system, and referred to as a NodeB (NodeB) in a 3rd generation (3rd generation, 3G) system. In a next-generation system, the device is referred to as a gNB (gNodeB).

Optionally, the 5G communication system further includes a UPF network element, where the UPF network element may implement functions such as forwarding, counting, and detection of a packet of the user. The UPF network element may also be referred to as an UPF device or an UPF entity.

Optionally, the 5G communication system further includes a policy control function (policy control function, PCF) network element. The network element includes a policy control function and a flow-based charging control function. For example, the PCF network element may implement a user subscription data management function, a policy control function, a charging policy control function, and QoS control. The PCF network element may also be referred to as a PCF entity or a PCF device.

Optionally, the network elements shown in FIG. 1a may further include a security anchor function (security anchor function, SEAF) network element, and the SEAF network element and the AMF network element are co-deployed.

It should be noted that, in FIG. 1a, another network element (which is also referred to as a functional entity) may be further included. For example, the SMF network element is responsible for a terminal session, for example, a session management function such as establishing, releasing, and changing a user plane transmission path, selecting a UPF network element for allocation, an internet protocol (internet protocol, IP) address, quality of service (quality of service, QoS) management of a session, and obtaining a policy control and charging (policy control and charging, PCC) policy from the PCF network element. A NEF network element is responsible for connecting the SMF network element and an external DN network, and may include a third-party authentication network element. The UPF network element serves as an anchor point of a session connection of a PDU network element, and is responsible for data packet filtering, data transmission/forwarding, rate control, charging information generation, and the like of the terminal. The PCF network element allocates reference information to a network network element, for example, allocates reference information to the SMF network element or the NEF network element. A network slice selection function (network slice selection function, NSSF) is used to select a proper network slice for UE. A data network (data network, DN) provides an external data network service. An application function (application function, AF) is used for interaction between an external application and the PCF network element in a core network, and is mainly used to perform policy and charging control on an IP-connectivity access network (IP-connectivity access network, IP-CAN) corresponding to the application. Only several network elements (function entities) in this application are described in detail herein. The network elements are connected to each other through Nx interfaces (for example, N1 and N8 in the figure).

For a network slice architecture in a conventional technology, the UPF network element and the SMF network element are network elements unique to each network slice, and the AMF network element, the PCF network element, the AUSF network element, and the UDM network element are network elements shared by a plurality of network slices. Therefore, in the existing architecture, security and privacy information (for example, an identity, subscription data, a policy, and communication data security of the user) of the terminal device in the AUSF network element and the UDM network element is still controlled and managed by an operator public network.

The foregoing network elements may be network elements that are implemented on dedicated hardware, or may be software instances that are run on dedicated hardware, or may be instances that implement a virtualization function on a proper platform. For example, the foregoing virtualization platform may be a cloud platform.

In addition, embodiments of this application are also applicable to another future-oriented communication technology, for example, 6G. Network architectures and service scenarios described in this application are intended to describe the technical solutions in this application more clearly, and do not constitute a limitation on the technical solutions provided in this application. A person of ordinary skill in the art may know that: With evolution of network architectures and emergence of new service scenarios, the technical solutions provided in this application are also applicable to similar technical problems.

In a new application scenario, 3GPP proposes a standalone non-public network (Standalone Non-Public Network, SNPN) architecture that can support a service provider (Service Provider, SP). In this architecture, the SP plays a role of a home network (home network), and an SNPN plays a role of a visited network (Visited Network). The SP has subscription data (Subscription) and a credential (Credential) of a terminal device. For example, a smartphone selects a serving network of the smartphone, and obtains a first serving network identifier. When the smartphone accesses a visited network (Visited Network) by using a base station, the smartphone sends a registration request to an AMF in the visited network.

On a UE side, the smartphone sends a registration request message to the AMF.

On a network side, the AMF initiates an authentication procedure. The AMF sends a first authentication request message to an AUSF. The first authentication request message is for requesting to invoke an authentication service provided by the AUSF. The first authentication request message carries the first serving network identifier. The AUSF belongs to a home network (home network) of UE. The first authentication request message further carries an authentication manner supported by the AMF.

The AUSF sends an authentication vector request message to a UDM. The authentication vector request message carries the first serving network identifier and the received authentication manner supported by the AMF. The UDM selects authentication manneran authentication manner based on the received authentication manner supported by the AMF. The UDM generates an authentication vector based on the selected authentication manner. The UDM sends an authentication vector response message to the AUSF, where the authentication vector response message carries the selected authentication manner and the authentication vector generated by the UDM. The authentication vector response message further includes an SUPI of the UE. The authentication vector may include an authentication token (authentication token, AUTN), a random number (RAND), and an expected response (eXpected response, XRES or XRES^{∗}). The authentication vector may further include a fifth intermediate key K_{AUSF}, or a sixth intermediate key CK' and a seventh intermediate key IK'.

After receiving the authentication vector response message, the AUSF sends a first authentication response message to the AMF. The authentication response carries the AUTN and the RAND. After receiving the sixth intermediate key CK' and the seventh intermediate key IK', the AUSF calculates the fifth intermediate key K_{AUSF}.

After receiving the first authentication response message that carries the authentication token AUTN and the RAND, the AMF sends a second authentication request message to the smartphone. The second authentication request message carries the AUTN and the RAND.

On the UE side, the smartphone calculates a response (Response, RES or RES*) based on the received second authentication request message. The smartphone sends a second authentication response message to the AMF. The second authentication response message carries the calculated response (RES or RES*). The UE further determines whether to generate a first identifier. If a second condition is satisfied, the UE generates the first identifier. The second condition includes:
the first serving network identifier includes a PLMN ID and an NID;
the first serving network identifier includes a PLMN ID and an NID, and a second serving network identifier includes the PLMN ID but does not include the NID;
a visited network of the UE is an SNPN network;
a visited network of the UE is an SNPN network, and the home network of the UE is a PLMN network;
a visited network of the UE and the home network of the UE are two different networks; or
a local configuration of the UE indicates to generate the first identifier; or
the UE receives a second indication from the AMF, where the second indication indicates the UE to generate the first identifier.

The UE further generates a key. Specifically, the UE (or a universal subscriber identity module (universal subscriber identity module, USIM)) generates a third intermediate key CK and a fourth intermediate key IK based on the received RAND and a long term key K. The UE generates the fifth intermediate key K_{AUSF}. That the UE generates the fifth intermediate key K_{AUSF} may include: The UE generates the fifth intermediate key K_{AUSF} based on the third intermediate key CK and the fourth intermediate key IK. Alternatively, the UE generates the sixth intermediate key CK' and the seventh intermediate key IK' based on the third intermediate key CK and the fourth intermediate key IK, and then generates the fifth intermediate key K_{AUSF} based on the sixth intermediate key CK' and the seventh intermediate key IK'. The UE generates a first intermediate key K_{SEAF} based on the fifth intermediate key K_{AUSF}. The UE generates a second intermediate key K_{AMF} based on the first intermediate key K_{SEAF}, the first identifier, and an ABBA parameter. The smartphone generates a non-access stratum (Non-Access Stratum, NAS) key based on the second intermediate key K_{AMF}, where the NAS key is for protecting a NAS stratum message.

On the network side, after receiving the second authentication response message from the smartphone, the AMF sends a third authentication request message to the AUSF, where the third authentication request message carries the received RES or RES*. The AUSF verifies the received RES or RES*, and specifically, verifies whether the received RES or RES* is the same as the expected response (XRES or XRES*) obtained from the UDM. After the verification succeeds, the AUSF determines whether to generate the first identifier. Specifically, if a first condition is satisfied, the AUSF generates the first identifier. The first condition includes:
the first serving network identifier received by the AUSF includes a PLMN ID and an NID;
the first serving network identifier received by the AUSF includes a PLMN ID and an NID, and a second serving network identifier includes the PLMN ID but does not include the NID;
the visited network of the UE is an SNPN network;
the visited network of the UE is an SNPN network, and the home network of the UE is a PLMN network;
the visited network of the UE and the home network of the UE are two different networks; or
a local configuration of the AUSF indicates to generate the first identifier.

The AUSF generates the first identifier based on the SUPI of the smartphone. After generating the first identifier, the AUSF sends the first identifier to an SEAF. The SEAF generates a second intermediate key K_{AMF} based on the first intermediate key K_{SEAF}, the ABBA parameter, and the first identifier. The SEAF sends the second intermediate key K_{AMF} to the AMF. The AMF generates a non-access stratum NAS key based on the second intermediate key K_{AMF}, where the NAS key is for protecting a NAS message. After generating the first identifier, the AUSF sends the first identifier to the UDM. The UDM receives the first identifier, and stores a correspondence between the first identifier and the SUPI. In this application scenario, the AUSF generates the first identifier, where the first identifier identifies the UE, and the AUSF sends the first identifier to the SEAF. This avoids sending the SUPI to the SEAF, so that leaking of privacy information of the UE is avoided, and communication security is improved.

The following describes a key architecture of a 5th generation mobile communication system. FIG. 1b is a schematic diagram of a key architecture of a 5th generation mobile communication system.

UE (or a USIM) and a UDM (or an ARPF or a unified data repository (Unified Data Repository, UDR)) store a long term key K of the UE.

On a network device side, the UDM or the ARPF generates a third intermediate key CK and a fourth intermediate key IK based on the long term key K of the UE. A manner of generating a fifth intermediate key K_{AUSF} varies with an authentication manner selected by the UDM. When the authentication manner selected by the UDM for use is 5G AKA, the UDM or the ARPF generates the fifth intermediate key K_{AUSF} based on the third intermediate key CK and the fourth intermediate key IK. The UDM sends the generated fifth intermediate key K_{AUSF} to an AUSF. When the authentication manner selected by the UDM for use is EAP-AKA', the UDM or the ARPF generates a sixth intermediate key CK' and a seventh intermediate key IK' based on the third intermediate key CK and the fourth intermediate key IK. The UDM sends the generated sixth intermediate key CK' and the seventh intermediate key IK' to an AUSF. The AUSF generates the fifth intermediate key K_{AUSF} based on the sixth intermediate key CK' and the seventh intermediate key IK'.

The AUSF generates a first intermediate key K_{SEAF} based on the fifth intermediate key K_{AUSF}, and sends the first intermediate key K_{SEAF} to an SEAF. The SEAF generates a second intermediate key K_{AMF} based on the first intermediate key K_{SEAF}, and sends the second intermediate key KAMF to an AMF. The AMF generates a NAS key based on the second intermediate key K_{AMF}.

On a terminal device side, the USIM first generates a third intermediate key CK and a fourth intermediate key IK based on the long term key K of the UE. The USIM sends the third intermediate key CK and the fourth intermediate key IK to the UE. Second, similar to that of the network side, a manner of generating a fifth intermediate key K_{AUSF} varies with different authentication manners. When the used authentication manner is 5G AKA, the UE generates the fifth intermediate key K_{AUSF} based on the third intermediate key CK and the fourth intermediate key IK. When the used authentication manner is EAP-AKA', the UE generates a sixth intermediate key CK' and a seventh intermediate key IK' based on the third intermediate key CK and the fourth intermediate key IK. The UE generates the fifth intermediate key K_{AUSF} based on the sixth intermediate key CK' and the seventh intermediate key IK'.

The UE generates a first intermediate key K_{SEAF} based on the fifth intermediate key K_{AUSF}. The UE generates a second intermediate key K_{AMF} based on the first intermediate key K_{SEAF}. The UE generates a NAS key based on the second intermediate key K_{AMF}.

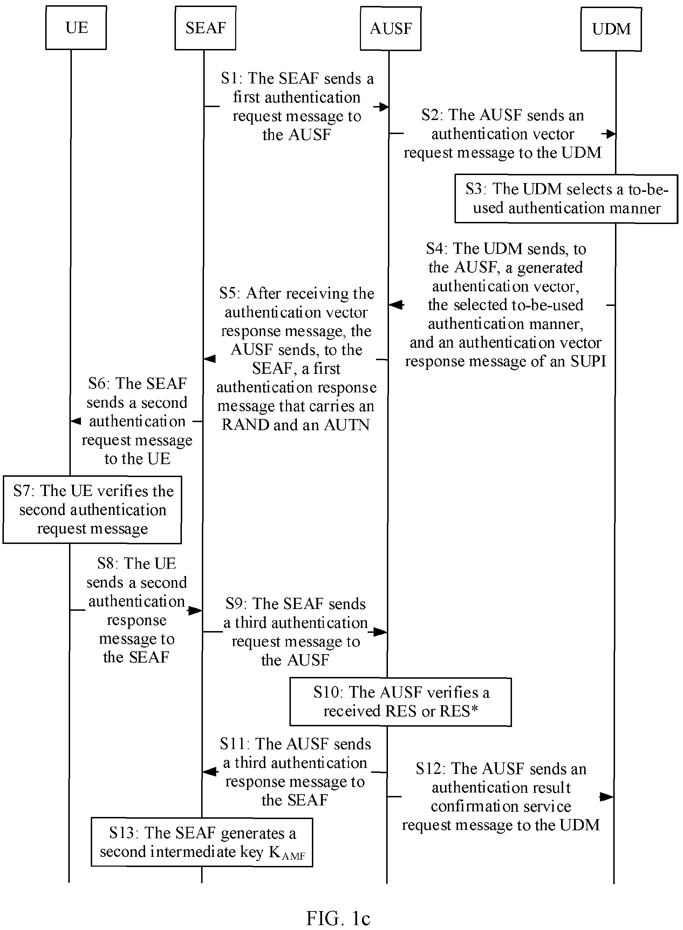

Second, an authentication procedure in embodiments of this application is described. FIG. 1c is a schematic flowchart of 5G authentication according to an embodiment of this application. For key generation involved in the authentication procedure, refer to the descriptions in FIG. 1b.

S1: An SEAF sends a first authentication request message to an AUSF.

In step S1, the SEAF decides to initiate primary authentication, where the primary authentication is for performing bidirectional authentication between a network side and UE, and generating a key.

Specifically, the SEAF sends the first authentication request message to the AUSF. The first authentication request message is for requesting to invoke an authentication service provided by the AUSF. The first authentication request message carries an identifier of the UE and a first serving network identifier.

The identifier of the UE that is carried in the first authentication request may be a subscription concealed identifier (subscription concealed identifier, SUCI) or an SUPI.

S2: The AUSF sends an authentication vector request message to the UDM.

In step S2, the AUSF sends the authentication vector request message to the UDM based on the received first authentication request message. The authentication vector request message is for requesting to invoke an authentication vector service provided by the UDM, or requesting an authentication vector. The first authentication request message carries the received first serving network identifier and the identifier of the UE.

S3: The UDM selects authentication manneran authentication manner.

In step S3, if the UDM receives the SUCI, the UDM obtains the SUPI of the UE based on the SUCI. The UDM selects the authentication manner, and generates an authentication vector based on the selected authentication manner.

If the authentication manner selected by the UDM is 5G AKA, the authentication vector generated by the UDM is referred to as a first authentication vector. If the authentication manner selected by the UDM is EAP-AKA', the authentication vector generated by the UDM is referred to as a second authentication vector. Specifically, the second authentication vector includes a random number (RAND), an authentication token (Authentication Token, AUTN), a second expected response (XRES), a sixth intermediate key (CK'), and a seventh intermediate key (IK'). The first authentication vector includes a random number (RAND), an authentication token (Authentication Token, AUTN), a first expected response (XRES*), and a fifth intermediate key (K_{AUSF}). The AUTN includes an authentication management field (Authentication Management Field), exclusive OR of a sequence number (Sequence number, SQN) and an anonymity key AK, and a message authentication code MAC. The AK is generated by the UDM or the ARPF based on the long term key K of the UE and the RAND. The MAC is generated by the UDM or the ARPF based on the long term key K of the UE, the authentication management field, the RAND, and the SQN. The XRES is generated by the UDM or the ARPF based on the long term key K of the UE and the RAND. The XRES^{∗} is generated by the UDM or the ARPF based on the third intermediate key CK, the fourth intermediate key IK, the first serving network identifier, the RAND, and the XRES.

In this embodiment of this application, a part of the authentication vector is any one or more of the following: the RAND, the AUTN, the CK, the IK, the CK', the IK', the XRES, the AK, the authentication management field, the K, the SQN, and the MAC. Alternatively, the part of the authentication vector may be a result of any operation performed on any one or more of the RAND, the AUTN, the CK, the IK, the CK', the IK', the XRES, the AK, the authentication management field, the K, the SQN, and the MAC. The operation includes but is not limited to an exclusive OR operation, a concatenation operation, a hash operation, and the like. Alternatively, the part of the authentication vector may be any one or more of the following: the RAND, the AUTN, the K_{AUSF}, the XRES*, the XRES, the CK, the IK, the AK, the AMF, the K, the SQN, and the MAC. Alternatively, the part of the authentication vector may be a result of any operation performed on any one or more of the RAND, the AUTN, the K_{AUSF}, the XRES*, the XRES, the CK, the IK, the AK, the AMF, the K, the SQN, and the MAC. The operation includes but is not limited to the exclusive OR operation, the concatenation operation, the hash operation, and the like.

S4: The UDM sends, to the AUSF, the generated authentication vector, the selected authentication manner, and an authentication vector response message of the SUPI.

In step S4, the authentication vector response message is a response of the UDM to the received authentication vector request message.

S5: After receiving the authentication vector response message, the AUSF sends, to the SEAF, a first authentication response message that carries the RAND and the AUTN.

In step S5, the first authentication response message is a response of the AUSF to the first authentication request message.

If the selected authentication manner is 5G AKA, the AUSF further generates a first intermediate key K_{SEAF} before sending the first authentication response to the SEAF.

S6: The SEAF sends a second authentication request message to the UE.

In step S6, the SEAF sends the second authentication request message to the UE, where the second authentication request message is for requesting the UE to perform primary authentication. The second authentication request message carries the RAND and the AUTN.

S7: The UE verifies the second authentication request message.

In step S7, after receiving the second authentication message, the UE verifies the second authentication request message, to verify whether the AUTN is acceptable.

If the AUTN is acceptable, the UE generates a response RES or RES*. Specifically, the UE determines, based on the second authentication request message, the authentication manner to be used on the network side:
If the authentication manner to be used on the network side is 5G AKA, the UE generates the RES*. The UE generates the RES* by using a method the same as that used by the UDM to generate the XRES*. To be specific, the UE generates the RES* based on the third intermediate key CK, the fourth intermediate key IK, the first serving network identifier, the RAND, and the RES. The RES is generated by the UE based on the long term key K of the UE and the RAND.

If the authentication manner to be used on the network side is EAP-AKA', the UE generates the RES. The UE generates the RES by using a method the same as that used by the UDM to generate the XRES. To be specific, the UE generates the RES based on the long term key K of the UE and the RAND.

Before generating the RES or the RES*, the UE generates the third intermediate key CK and the fourth intermediate key IK.

S8: The UE sends a second authentication response message to the SEAF. The second authentication response message includes the RES or the RES*.

S9: The SEAF sends a third authentication request message to the AUSF. The third authentication request message includes the received RES or RES*.

S10: The AUSF verifies the received RES or RES*.

In step S10, when the received RES is the same as the XRES, or the received RES* is the same as the XRES^{∗}, the AUSF successfully verifies the RES or the RES*. If the AUSF successfully verifies the RES or the RES*, the AUSF performs step S11. If the AUSF fails to verify the RES or the RES*, the AUSF returns an error to the SEAF.

S11: The AUSF sends a third authentication response message to the SEAF.

In step S11, the third authentication response message carries the first intermediate key K_{SEAF}.

If the selected authentication manner is EAP-AKA', the AUSF generates the first intermediate key K_{SEAF} before sending the third authentication response message.

S12: The AUSF sends an authentication result confirmation service request message to the UDM.

In step S12, after verifying the RES or the RES*, the AUSF sends the authentication result confirmation service request message to the UDM. The authentication result confirmation service request message is for notifying the UDM of an authentication result.

S13: The SEAF generates a second intermediate key K_{AMF}.

In step S13, after receiving the third authentication response message, the SEAF generates the second intermediate key K_{AMF}, and sends the second intermediate key K_{AMF} to the AMF.

In this embodiment of this application, the SUPI of the UE identifies the UE. The SUPI is defined as an SUPI type and an SUPI value. The SUPI type may be an international mobile subscriber identity (International Mobile Subscriber Identity, IMSI) or a network specific identifier (Network specific identifier). If the SUPI type is the IMSI, the SUPI value is the IMSI. When the SUPI type is the network specific identifier, the SUPI value is in a network access identifier (Network Access Identifier, NAI) format, that is, usemame@realm. username is a user name, and realm is a realm corresponding to the user name.

The IMSI also identifies the UE. The IMSIincludes a mobile country code (Mobile Country Code, MCC), a mobile network code (Mobile Network Code), and a mobile subscriber identification number (Mobile Subscriber Identification Number, MSIN). The MSIN identifies a mobile subscription in a PLMN or an SNPN. A part of the SUPI is one or more of the following information: the IMSI, the MCC, the MNC, the MSIN, username, or realm.

In embodiments of this application, a PLMN ID identifies a PLMN network. The PLMN ID includes the MCC and the MNC.

In embodiments of this application, one SNPN network is identified by a PLMN ID and an NID. The NID includes an assignment mode (assignment mode) and an NID value. The assignment mode may be self-assignment (self-assignment). To be specific, each SNPN performs assignment during deployment. Alternatively, the assignment mode may be coordinated assignment (Coordinated assignment).

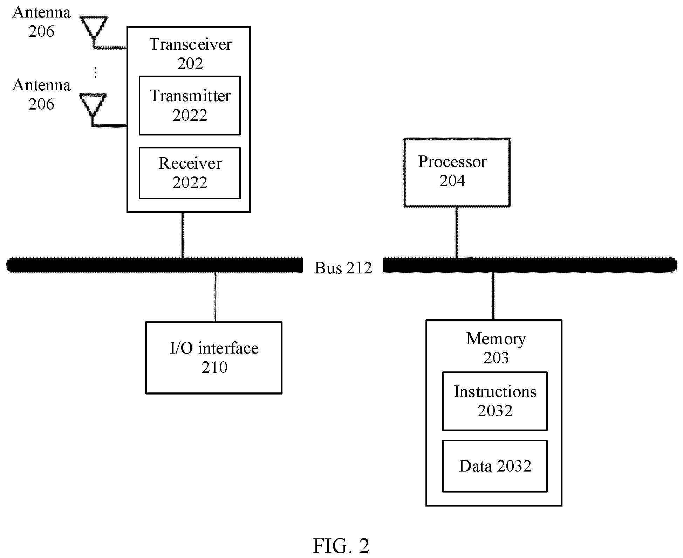

FIG. 2 is a schematic diagram of a hardware structure of a communication apparatus according to an embodiment of this application. The communication apparatus may be a possible implementation of an AUSF, a UDM, an AMF (or an SEAF), or a terminal device in embodiments of this application. As shown in FIG. 2, the communication apparatus includes at least a processor 204, a memory 203, and a transceiver 202. The memory 203 is further configured to store instructions 2032 and data 2032. Optionally, the communication apparatus may further include antennas 206, an I/O (input/output, Input/Output) interface 210, and a bus 212. The transceiver 202 further includes a transmitter 2022 and a receiver 2022. In addition, the processor 204, the transceiver 202, the memory 203, and the I/O interface 210 are communicatively connected to each other through the bus 212, and the antennas 206 are connected to the transceiver 202.

The processor 204 may be a general-purpose processor, for example, but not limited to, a central processing unit (Central Processing Unit, CPU), or may be a dedicated processor, for example, but not limited to, a digital signal processor (Digital Signal Processor, DSP), an application-specific integrated circuit (Application-Specific Integrated Circuit, ASIC), or a field programmable gate array (Field Programmable Gate Array, FPGA). In addition, the processor 204 may alternatively be a combination of a plurality of processors. In particular, in the technical solutions provided in embodiments of this application, the processor 204 may be configured to perform related steps of a communication method in subsequent method embodiments. The processor 204 may be a processor that is specially designed to perform the foregoing steps and/or operations, or may be a processor that performs the foregoing steps and/or operations by reading and executing the instructions 2032 stored in the memory 203. The processor 204 may need to use the data 2032 in a process of performing the foregoing steps and/or operations.

The transceiver 202 includes the transmitter 2022 and the receiver 2022. In an optional implementation, the transmitter 2022 is configured to send a signal by using the antenna 206. The receiver 2022 is configured to receive a signal by using at least one of the antennas 206. In particular, in the technical solutions provided in embodiments of this application, the transmitter 2022 may be specifically configured to perform, by using at least one of the antennas 206, for example, the operation performed by a receiving module or a sending module in the AUSF, the UDM, the AMF (or the SEAF), or the terminal device when the communication method in the subsequent method embodiments is applied to the AUSF, the UDM, the AMF (or the SEAF), or the terminal device.

In this embodiment of this application, the transceiver 202 is configured to support the communication apparatus in performing the foregoing receiving function and sending function. A processor having a processing function is considered as the processor 204. The receiver 2022 may also be referred to as a receiving machine, an input port, a receiver circuit, or the like. The transmitter 2022 may be referred to as a transmitting machine, a transmitter, a transmitter circuit, or the like.

The processor 204 may be configured to execute the instructions stored in the memory 203, to control the transceiver 202 to receive a message and/or send a message, to complete functions of the communication apparatus in the method embodiments of this application. In an implementation, it may be considered that a function of the transceiver unit 202 is implemented by using a transceiver circuit or a dedicated transceiver chip.

The memory 203 may be various types of storage media, for example, a random access memory (Random Access Memory, RAM), a read-only memory (Read-Only Memory, ROM), a non-volatile RAM (Non-Volatile RAM, NVRAM), a programmable ROM (Programmable ROM, PROM), an erasable PROM (Erasable PROM, EPROM), an electrically erasable PROM (Electrically Erasable PROM, EEPROM), a flash memory, an optical memory, and a register. The memory 203 is specifically configured to store the instructions 2032 and the data 2032. The processor 204 may perform the steps and/or the operations in the method embodiments of this application by reading and executing the instructions 2032 stored in the memory 203. The data 2032 may need to be used in a process of performing the operations and/or the steps in the method embodiments of this application.

Optionally, the communication apparatus may further include the I/O interface 210. The I/O interface 210 is configured to receive instructions and/or data from a peripheral device, and output instructions and/or data to the peripheral device.

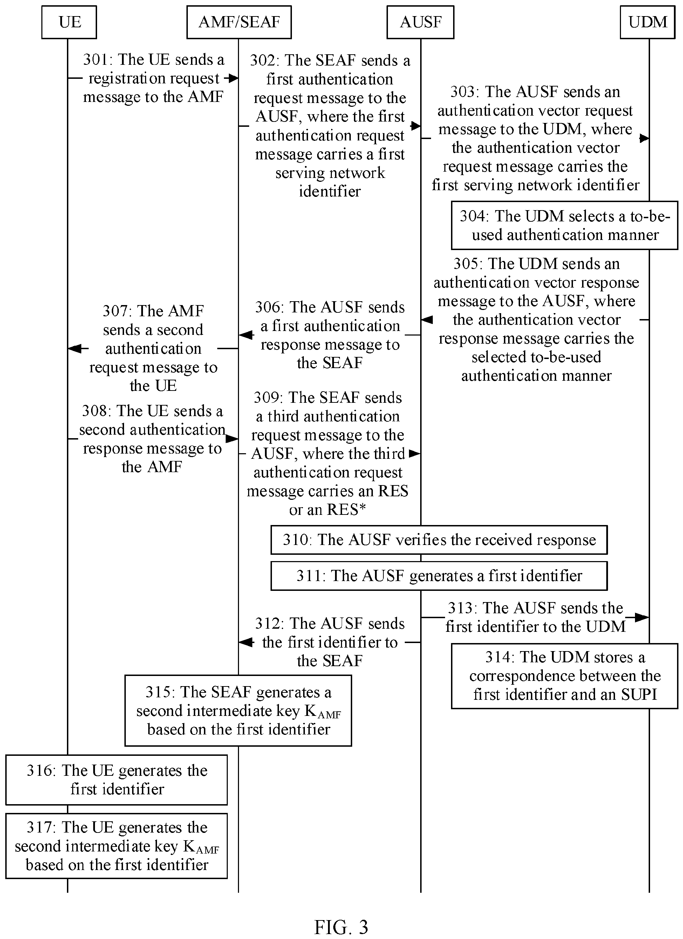

The following describes a method part in embodiments of this application. Based on FIG. 1a to FIG. 1c, FIG. 3 is a schematic diagram of an embodiment of a communication method according to an embodiment of this application. The key generation procedure shown in FIG. 1b and the key transfer procedure shown in FIG. 1c are applicable to FIG. 3. The communication method provided in this embodiment of this application includes the following steps.

301: UE sends a registration request message to an AMF.

In this embodiment, the registration request message carries an identifier of the UE. The identifier may be, for example, a subscription concealed identifier (Subscription Concealed Identifier, SUCI).

302: An SEAF sends a first authentication request message to an AUSF, where the first authentication request message carries a first serving network identifier.

In this embodiment, after receiving the registration request message from the UE, the AMF notifies the SEAF of the registration request message. Specifically, the SEAF initiates primary authentication in response to the registration request message. First, the SEAF sends the first authentication request message to the AUSF. The first authentication request message is for requesting to invoke an authentication service provided by the AUSF. The primary authentication is for implementing bidirectional authentication between a network side and the UE, and generating a key. The first authentication request message further carries the identifier of the UE, for example, the received SUCI.

For example, the first authentication request message is a Nausf_UEAuthentication_Authenticate Request message.

A network in which the AMF or the SEAF is located is a serving network of the UE. In a roaming scenario, the serving network of the UE is also referred to as a visited network of the UE.

In this embodiment of this application, the first serving network identifier is an identifier of the serving network of the UE, and is for identifying the serving network of the UE. When the serving network of the UE is an SNPN, the first serving network identifier includes a PLMN ID and an NID, and the PLMN ID and the NID are together for identifying the serving network. When the serving network of the UE is a PLMN, the first serving network identifier includes a PLMN ID but does not include an NID, and the PLMN ID may identify the serving network.

A network in which the AUSF is located is referred to as a home network of the UE. The home network may be a PLMN or an SNPN.

In this embodiment of this application, a second serving network identifier is for identifying the home network of the UE. When the home network of the UE is an SNPN, the second serving network identifier includes a PLMN ID and an NID, and the PLMN ID and the NID are together for identifying the home network. When the home network of the UE is a PLMN, the second serving network identifier includes a PLMN ID but does not include an NID, and the PLMN ID may identify the home network.

In an optional implementation, the first authentication request message carries a first authentication manner. The first authentication manner is an authentication manner supported by the AMF, an authentication manner supported by the SEAF, an authentication manner supported by the visited network of the UE, or an authentication manner supported by the serving network of the UE.

In another optional implementation, alternatively, the first authentication request message may not carry the first authentication manner. In this case, the first authentication manner may be sent to the AUSF by using another message, for example, a newly defined message.

303: The AUSF sends an authentication vector request message to the UDM, where the authentication vector request message carries the first serving network identifier.

In this embodiment, the authentication vector request message is for requesting to invoke an authentication service provided by the UDM (or an authentication vector service, or is for requesting an authentication vector). For example, the authentication vector request message is a Nudm_UEAuthentication_Get Request message. The authentication vector request message may further carry the identifier of the UE.

In an optional implementation, the authentication vector request message carries the first authentication manner received by the AUSF.

In an optional implementation, alternatively, the authentication vector request message may not carry the first authentication manner. In this case, the first authentication manner may be sent to the UDM by using another message, for example, a newly defined message.

304: The UDM selects authentication manneran authentication manner.

In this embodiment, the UDM selects the authentication manner based on the received first authentication manner, for example, the EAP-AKA' or the 5G AKA.

305: The UDM sends an authentication vector response message to the AUSF, where the authentication vector response message carries the selected authentication manner.

In this embodiment, before sending the authentication vector response message to the AUSF, the UDM generates an authentication vector. Specifically, the UDM generates the corresponding authentication vector based on the selected authentication manner. For a specific procedure of generating the authentication vector, refer to related descriptions in FIG. 1c. Details are not described herein again.

Optionally, before the UDM generates the authentication vector, if the identifier of the UE that is received by the UDM is the SUCI, the UDM obtains, based on the SUCI, an SUPI and subscription data of the UE, including the long term key K of the UE.

The authentication vector response message carries the generated authentication vector.

The authentication vector response message further carries the SUPI of the UE.

For example, the authentication vector response message is a Nudm_UEAuthentication_Get Response message.

306: The AUSF sends a first authentication response message to the SEAF.

In this embodiment, for example, the first authentication response message is a Nausf_UEAuthentication_Authenticate Response message. The first authentication response message carries a RAND and an AUTN in the authentication vector received by the AUSF.

307: The AMF sends a second authentication request message to the UE.

In this embodiment, the SEAF first notifies the AMF that the SEAF receives the first authentication response message from the AUSF. In response to the first authentication response message, the AMF then sends the second authentication request message to the UE, where the second authentication request message carries the received RAND and AUTN.

For example, the second authentication request message is an Authenticate Request message.

308: The UE sends a second authentication response message to the AMF.

In this embodiment, after receiving the RAND and the AUTN, the UE first verifies whether the AUTN is acceptable, and generates a response (RES or RES*). For specific steps of generating the response, refer to related descriptions in FIG. 1c. Details are not described herein again.

The UE then sends the generated response (RES or RES*) to the AMF. Specifically, the UE sends the response to the AMF by using the second authentication response message. The second authentication response message includes the RES or the RES*. The response is for verifying the UE on the network side. For example, the second authentication response message is an Authenticate Response message.

309: The SEAF sends a third authentication request message to the AUSF, where the third authentication request message carries the RES or the RES*.

In this embodiment, after receiving the second authentication response message from the UE, the AMF notifies the SEAF of the second authentication response message. In response to the second authentication response message, the SEAF sends the third authentication request message to the AUSF, where the third authentication request message carries the RES or RES* received by the AMF.

For example, the third authentication request message is a Nausf_UEAuthentication_Authenticate Request message.

310: The AUSF verifies the received response.

In this embodiment, the AUSF verifies the response (which is carried in the third authentication request message) from the UE, where the response is the RES or the RES*. If the AUSF successfully verifies the response, the AUSF successfully authenticates the UE.

If the selected authentication manner is the EAP-AKA', the AUSF generates a first intermediate key K_{SEAF} after the AUSF successfully verifies the response.

If the selected authentication manner is the 5G-AKA, the AUSF generates the first intermediate key K_{SEAF} after step 305 (to be specific, the AUSF receives the authentication vector).

311: The AUSF generates a first identifier.

In this embodiment, after the AUSF successfully verifies the response, the AUSF generates the first identifier. The first identifier is for identifying the UE. In this embodiment of this application, the first identifier is referred to as an SUPI*.

Optionally, before generating the first identifier, the AUSF determines that the AUSF generates the first identifier when a first condition is satisfied. The first condition includes:
the first serving network identifier received by the AUSF includes a PLMN ID and an NID;
the first serving network identifier received by the AUSF includes a PLMN ID and an NID, and a second serving network identifier includes the PLMN ID but does not include the NID;
the visited network of the UE is an SNPN network;
the visited network of the UE is an SNPN network, and the home network of the UE is a PLMN network;
the visited network of the UE and the home network of the UE are two different networks; or
a local configuration of the AUSF indicates to generate the first identifier.

In an optional implementation, after step 310, after the AUSF successfully verifies the response, the AUSF directly generates the first identifier without determining whether to generate the first identifier.

Specifically, the AUSF may generate the first identifier based on a plurality of parameters or fields, which specifically include any one or more of the following:
(A) the SUPI or a part of the SUPI;
(B) a shared key between the UE and the AUSF;
(C) a network identifier, including the first serving network identifier and/or the second serving network identifier;
(D) routing information, including a routing indicator (Routing Indicator, RI), and/or an AUSF group identifier (AUSF Group ID), and/or an AUSF instance identifier (AUSF Instance ID); and
(E) the authentication vector or a part of the authentication vector.

For the SUPI and the part of the SUPI, refer to related descriptions in FIG. 1c. Details are not described herein again. The shared key between the UE and the AUSF includes but is not limited to a fifth intermediate key K_{AUSF}, and/or a sixth intermediate key CK', and/or a seventh intermediate key IK'. For the authentication vector and the part of the authentication vector, refer to related descriptions in FIG. 1c. Details are not described herein again.

The first identifier may be specifically implemented in a plurality of manners, including but not limited to: the first identifier carries a parameter, a field, or a bit. The parameter, the field, or the bit indicates that the first identifier is associated with a specific SUPI. For example, as shown in Table 1:

**Table 1**

| First identifier | SUPI | UE |
|---|---|---|
| Field "UE1" | SUPI-1 | UE 1 |
| Parameter "134" | SUPI-2 | UE 2 |
| Bit "000100" | SUPI-3 | UE 3 |

In an optional implementation, the first identifier is generated according to a preset rule. The preset rule is preconfigured in the AUSF and the UE, and the AUSF and the UE generate the first identifier according to the same preset rule.

It should be noted that step 311: The AUSF generates a first identifier may be performed at any moment after step 305 and before step 312 or step 313. This is not limited in this embodiment of this application.

312: The AUSF sends the first identifier to the SEAF.

In this embodiment, the AUSF sends the first identifier to the SEAF. Specifically, the AUSF sends the first identifier to the SEAF by using a third authentication service response message. For example, the authentication service response is a Nausf_UEAuthentication_Authenticate Response message.

Optionally, the third authentication service response message carries the K_{SEAF}.

Optionally, the third authentication service response message carries a first indication indicating to generate the first identifier.

313: The AUSF sends the first identifier to the UDM.

In this embodiment, the AUSF sends the first identifier to the UDM.

In an optional implementation, the AUSF sends the first identifier to the UDM by using an authentication result confirmation service request message. The authentication result confirmation service request message is for notifying the UDM of an authentication result of the terminal device. For example, the authentication result confirmation service request message is a Nudm_UEAuthentication_ResultConfirmation Request message.

It should be noted that an execution sequence between step 312 and step 313 is not limited herein. Step 312 may be performed before step 313, step 313 may be performed before step 312, or step 312 and step 313 may be performed simultaneously.

314: The UDM stores a correspondence between the first identifier and the SUPI.

In this embodiment, after receiving the first identifier from the AUSF, the UDM stores the correspondence between the first identifier and the SUPI corresponding to the first identifier. Both the SUPI and the first identifier are for identifying the UE.

The UDM stores subscription data of the UE identified by the SUPI. Therefore, the UDM stores a correspondence between the first identifier, the SUPI corresponding to the first identifier, and the subscription data of the UE corresponding to the SUPI.

For example, the correspondence is shown in Table 2.

**Table 2**

| Correspondence | | |
|---|---|---|
| SUPI*1 | SUPI-1 | Subscription data of UE 1 |
| SUPI*2 | SUPI-2 | Subscription data of UE 2 |
| SUPI*3 | SUPI-3 | Subscription data of UE 3 |

315: The SEAF generates a second intermediate key K_{AMF} based on the first identifier.

In this embodiment, the SEAF first generates the second intermediate key K_{AMF} based on the first identifier. To be specific, the SEAF generates the second intermediate key K_{AMF} based on the first intermediate key K_{SEAF}, the first identifier, and an anti bidding down between architectures parameter ABBA. Then, the SEAF sends the K_{AMF} to the AMF. The AMF generates a NAS key based on the K_{AMF}, and the SEAF then sends the first identifier to the AMF.

If the SEAF receives the first indication, the SEAF sends, to the UE, a second indication indicating to generate the first identifier.

In this embodiment of this application, the first indication and the second indication may be a same indication or different indications. This is not limited herein.

316: The UE generates the first identifier.

In this embodiment, the UE generates the first identifier by using the same parameter and the same method as those used by the AUSF to generate the first identifier. For the parameter used by the AUSF to generate the first identifier, refer to descriptions in step 311. In this embodiment of this application, the method used by the AUSF and the UE to generate the first identifier is not limited.

Optionally, if a second condition is satisfied, the UE generates the first identifier. The second condition includes:
the first serving network identifier includes a PLMN ID and an NID;
the first serving network identifier includes a PLMN ID and an NID, and the second serving network identifier includes the PLMN ID but does not include the NID;
the visited network of the UE is an SNPN network;
the visited network of the UE is an SNPN network, and the home network of the UE is a PLMN network;
the visited network of the UE and the home network of the UE are two different networks;
a local configuration of the UE indicates to generate the first identifier; or
the UE receives the second indication from the AMF, where the second indication indicates the UE to generate the first identifier.

It should be noted that step 316 may be performed at any moment after step 301. This is not limited herein.

317: The UE generates the second intermediate key K_{AMF} based on the first identifier.

In this embodiment, the UE generates the second intermediate key K_{AMF} based on the first identifier. To be specific, the UE generates the second intermediate key K_{AMF} based on the first intermediate key K_{SEAF}, the first identifier, and the anti bidding down between architectures parameter ABBA. Alternatively, the UE generates the second intermediate key K_{AMF} based on the first intermediate key K_{SEAF}, the first identifier, a length of the first identifier, the ABBA, and a length of the ABBA.

The UE generates a NAS key based on the second intermediate key K_{AMF}, to protect a NAS communication message between the UE and the AMF.

The UE generates the first intermediate key K_{SEAF}. For details, refer to related descriptions in FIG. 1b and FIG. 1c. Details are not described herein again.

Optionally, the UE may further generate, based on the received RAND in a manner the same as that on the network side, the authentication vector or the part of the authentication vector used in the authentication.

It should be noted that step 317 may be performed at any moment after step 307.

In an optional implementation, after step 315, the AMF may send a service request to the UDM, where the service request carries the first identifier. Specifically, a service requested by the AMF from the UDM includes:
(A) a subscription data management service (for example, a Nudm_SubscriberDataManagement service), used by the AMF to request the UDM to obtain the subscription data of the UE, used by the AMF to request the UDM to subscribe to a notification of a UE data change, used by the AMF to request the UDM to unsubscribe to the notification of the UE data change, used by the AMF to request the UDM to subscribe to a notification of a data change, and the like; and
(B) a UE context management service (for example, a Nudm_UEContextManagement service), used to request AMF registration for 3 GPP access, request AMF registration for non-3 GPP access, request AMF deregistration for 3GPP access, request AMF deregistration for non-3GPP access, request to update an AMF registration parameter, request AMF deregistration, and the like.

After the UDM receives the service request that is sent by the AMF and that carries the first identifier, the UDM finds the corresponding SUPI based on the first identifier, and optionally, finds the subscription data of the UE corresponding to the SUPI.

In an optional implementation, after step 315, the SMF may send a service request to the UDM, where the service request carries the first identifier. Specifically, a service requested by the SMF from the UDM includes:
(A) a subscription data management service (for example, a Nudm_SubscriberDataManagement service), used by the SMF to request the UDM to obtain the subscription data of the UE, used by the SMF to request the UDM to subscribe to a notification of a UE data change, used by the SMF to request the UDM to unsubscribe to the notification of the UE data change, used by the SMF to request the UDM to subscribe to a notification of a data change, and the like; and
(B) a UE context management service (for example, a Nudm_UEContextManagement service), used to request to create new registration or SMF registration, used to request SMF deregistration, and the like.

After the UDM receives the service request that is sent by the SMF and that carries the first identifier, the UDM finds the corresponding SUPI based on the first identifier, and optionally, finds the subscription data of the UE corresponding to the SUPI.

In an optional implementation, after step 315, the SEAF may determine to initiate primary authentication, and the SEAF sends the first authentication request information to the AUSF. The first authentication request message carries the first identifier. After receiving the first authentication request message that carries the first identifier, the AUSF sends the authentication vector request message to the UDM. The authentication vector request message carries the received first identifier. The UDM finds, based on the first identifier, the corresponding SUPI and the long term key of the UE corresponding to the SUPI, and generates the authentication vector. Then, the UDM sends the SUPI to the AUSF.

In this embodiment of this application, the home network and the visited network first exchange messages to determine authentication methods of the home network and the visited network. This avoids a result of an authentication failure that is caused when the home network selects an authentication method that is not supported by the visited network. Then, the AUSF generates the first identifier. The first identifier for identifying the SUPI of the terminal device. The home network (the AUSF) sends the first identifier to the visited network (the AMF), to prevent the home network (the AUSF) from sending the SUPI of the UE to the visited network (the AMF). Because the SUPI is privacy information, leaking of privacy information of the terminal device is avoided. Therefore, communication security is improved.

It should be noted that, in the embodiment shown in FIG. 3, related steps (steps 302 to 306) of determining the authentication manner between the visited network and the home network and that the network side and the terminal side separately generate the first identifier and perform interaction based on the first identifier (steps 311 to 317) are independent of each other. In other words, the authentication manner is first determined between the visited network and the home network (similar to steps 302 to 306 in FIG. 3), and then the UDM sends the SUPI of the UE to the AMF by using the AUSF. Alternatively, the authentication manner is not determined between the visited network and the home network (similar to steps 302 to 306, but the related request and response do not carry the authentication manner). Then, the network side and the terminal side separately generate the first identifier and perform interaction based on the first identifier (similar to steps 310 to 317).

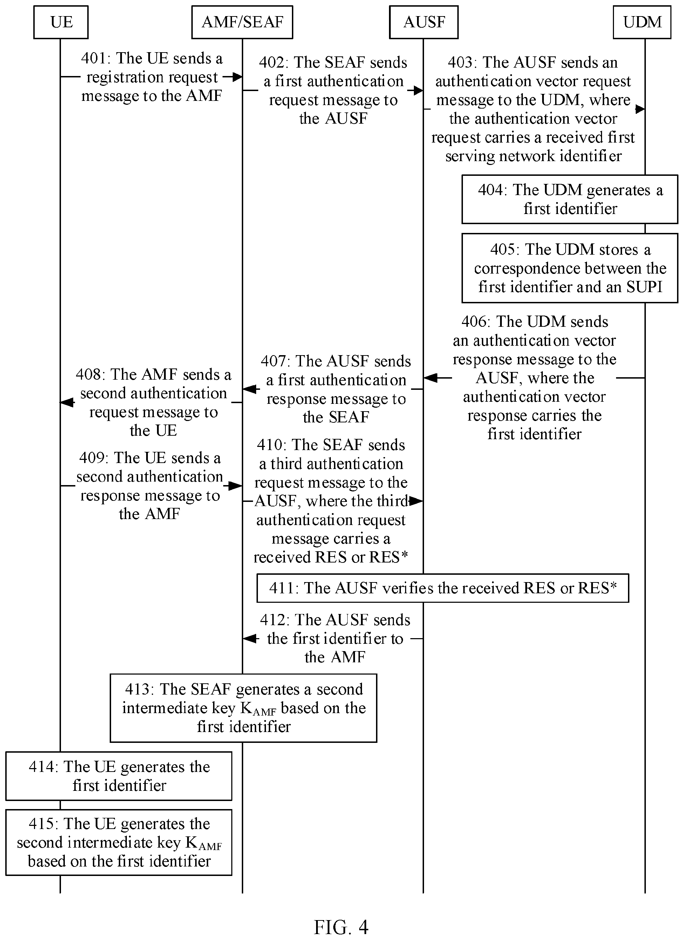

In addition to the descriptions that the AUSF generates the first identifier in the embodiment shown in FIG. 3, an embodiment of this application further provides a communication method in which the UDM generates the first identifier. Specifically, based on FIG. 1a to FIG. 1c, FIG. 4 is a schematic diagram of an embodiment of another communication method according to an embodiment of this application. The key generation procedure shown in FIG. 1b and the key transfer procedure shown in FIG. 1c are applicable to FIG. 4. The another communication method provided in this embodiment of this application includes the following steps.

401: UE sends a registration request message to an AMF.

In this embodiment, the registration request message carries an identifier of the UE. The identifier may be, for example, a subscription concealed identifier (Subscription Concealed Identifier, SUCI). Specifically, this step is similar to step 301, and details are not described herein again.

402: An SEAF sends a first authentication request message to an AUSF.

In this embodiment, the first authentication request message carries a first serving network identifier. The first authentication request message is for requesting to invoke an authentication service provided by the AUSF.

Specifically, after receiving the registration request message, the AMF notifies the SEAF. The SEAF initiates primary authentication, and the SEAF sends the first authentication request message to the AUSF. For the first serving network identifier, refer to related descriptions in FIG. 3. Details are not described herein again.

Optionally, the first authentication request message further carries an identifier of the UE, for example, the received SUCI.

403: The AUSF sends an authentication vector request message to a UDM, where the authentication vector request carries the received first serving network identifier.

In this embodiment, the authentication vector request message is for requesting to invoke an authentication service provided by the UDM, an authentication message service, or is for requesting an authentication vector.

For example, the authentication vector request is a "Nudm_UEAuthentication_Get Request" message.

The authentication vector request message carries the received identifier of the UE.

404: The UDM generates a first identifier.

In this embodiment, the first identifier is for identifying the UE. In this embodiment of this application, the first identifier is referred to as an SUPI*.

Optionally, if the UDM receives the SUCI, before the UDM generates the first identifier, the UDM obtains an SUPI and subscription data of the UE based on the received SUCI.

Optionally, before generating the first identifier, the UDM determines that the UDM generates the first identifier when a third condition is satisfied. The third condition includes:
the first serving network identifier received by the UDM includes a PLMN ID and an NID;
the first serving network identifier received by the UDM includes a PLMN ID and an NID, and a second serving network identifier includes the PLMN ID but does not include the NID;
a visited network of the UE is an SNPN network;
a visited network of the UE is an SNPN network, and a home network of the UE is a PLMN network;
a visited network of the UE and a home network of the UE are two different networks; or
a local configuration of the UDM indicates to generate the first identifier.

In an optional implementation, after step 403, the UDM directly generates the first identifier without the foregoing process of determining whether to generate the first identifier.

Specifically, the UDM may generate the first identifier based on a plurality of parameters or fields, which specifically include any one or more of the following:
(A) the SUPI or a part of the SUPI;
(B) a shared key between the UE and the AUSF;
(C) a network identifier, including the first serving network identifier and/or the second serving network identifier;
(D) routing information, including a routing indicator (Routing Indicator, RI), and/or an AUSF group identifier (AUSF Group ID), and/or an AUSF instance identifier (AUSF Instance ID); and
(E) the authentication vector or a part of the authentication vector.

For the SUPI and the part of the SUPI, refer to related descriptions in FIG. 1b and FIG. 1c. Details are not described herein again. The shared key between the UE and the AUSF includes but is not limited to a fifth intermediate key K_{AUSF}, and/or a sixth intermediate key CK', and/or a seventh intermediate key IK'. For the authentication vector and the part of the authentication vector, refer to related descriptions in FIG. 1b and FIG. 1c. Details are not described herein again.

The first identifier may be specifically implemented in a plurality of manners, including but not limited to: the first identifier carries a parameter, a field, or a bit. The parameter, the field, or the bit indicates that the first identifier is associated with a specific SUPI. Examples are shown in Table 1.

405: The UDM stores a correspondence between the first identifier and the SUPI.

In this embodiment, after generating the first identifier, the UDM stores the correspondence between the first identifier and the SUPI corresponding to the first identifier.

The UDM stores the subscription data of the UE corresponding to the SUPI. Therefore, the UDM stores a correspondence between the first identifier, the SUPI corresponding to the first identifier, and the subscription data of the UE corresponding to the SUPI.

406: The UDM sends an authentication vector response message to the AUSF, where the authentication vector response carries the first identifier.

In this embodiment, the UDM sends the authentication vector response message to the AUSF, where the authentication vector response message carries the first identifier.

Before sending the authentication vector response message to the AUSF, the UDM generates the authentication vector. Specifically, the UDM generates the corresponding authentication vector based on a selected authentication manner. For a specific procedure of generating the authentication vector, refer to related descriptions in FIG. 1c. Details are not described herein again.

For example, the authentication vector response is a "Nudm UEAuthentication_Get Response" message.

Optionally, the UDM adds, to the authentication vector response message, a third indication indicating to generate the first identifier.

407: The AUSF sends a first authentication response message to the SEAF.

In this embodiment, the AUSF sends the first authentication response message to the SEAF. The first authentication response message carries a RAND and an AUTN in the received authentication vector.

For example, the first authentication is a "Nausf_UEAuthentication_Authenticate Response" message.

If the AUSF receives the third indication, the AUSF adds, to the first authentication response message, a first indication indicating to generate the first identifier.

408: The AMF sends a second authentication request message to the UE.

In this embodiment, after receiving the first authentication response message, the SEAF notifies the AMF of the first authentication response message. In response to the first authentication response message, the AMF sends the second authentication request message to the UE. The second authentication request message carries the received AUTN and RAND.

Optionally, the second authentication request is an Authenticate Request message.

If the SEAF receives the first indication, the SEAF notifies the AMF of the first indication, and the AMF sends, to the UE based on the first indication, a second indication indicating to generate the first identifier.

In this embodiment, the first indication, the second indication, and the third indication may be a same indication or different indications.

409: The UE sends a second authentication response message to the AMF.

In this embodiment, after receiving the RAND and the AUTN, the UE first verifies the AUTN, and generates a response (RES or RES*). For specific steps of generating the response, refer to related descriptions in FIG. 1c. Details are not described herein again.

The UE then sends the generated response (RES or RES*) to the AMF. Specifically, the UE sends the response to the AMF by using the second authentication response message. The second authentication response message includes the RES or the RES*. The response is for verifying the UE on the network side. For example, the second authentication response message is an Authenticate Response message.

410: The SEAF sends a third authentication request message to the AUSF, where the third authentication request carries the received RES or RES*.

In this embodiment, after receiving the second authentication response message from the UE, the AMF notifies the SEAF of the second authentication response message. In response to the second authentication response message, the SEAF sends the third authentication request message to the AUSF, where the third authentication request message carries the received response.

For example, the third authentication request message is a Nausf_UEAuthentication_Authenticate Request message.

411: The AUSF verifies the received RES or RES*.

In this embodiment, if the AUSF successfully verifies the response, bidirectional authentication is implemented between the AUSF and the UE.

After the AUSF successfully verifies the response RES or RES*, the AUSF generates a first intermediate key K_{SEAF}. Possibly, after receiving the authentication vector (that is, after step 406), the AUSF generates the first intermediate key K_{SEAF}.

412: The AUSF sends the first identifier to the AMF.

In this embodiment, the AUSF sends the first identifier to the AMF. Optionally, the AUSF sends the first identifier to the AMF by using a third authentication service response message, where the third authentication service response message includes the first identifier. For example, the authentication service response is a Nausf_UEAuthentication_Authenticate Response message. The third authentication service response message includes the first intermediate key K_{SEAF}.

413: The SEAF generates a second intermediate key K_{AMF} based on the first identifier.

In this embodiment, the SEAF generates the second intermediate key K_{AMF} based on the first identifier. To be specific, the SEAF generates the second intermediate key K_{AMF} based on the first intermediate key K_{SEAF}, the first identifier, and an anti bidding down between architectures parameter ABBA.

The SEAF sends the second intermediate key K_{AMF} to the AMF. The AMF generates a NAS key based on the second intermediate key K_{AMF}.

414: The UE generates the first identifier.

In this embodiment, the UE generates the first identifier by using the same parameter and the same method as those used by the AUSF to generate the first identifier. For the parameter used by the AUSF to generate the first identifier, refer to descriptions in step 311. In this embodiment of this application, the method used by the AUSF and the UE to generate the first identifier is not limited.

Optionally, if a second condition is satisfied, the UE generates the first identifier. The second condition includes:
the first serving network identifier includes a PLMN ID and an NID;
the first serving network identifier includes a PLMN ID and an NID, and the second serving network identifier includes the PLMN ID but does not include the NID;
the visited network of the UE is an SNPN network;
the visited network of the UE is an SNPN network, and the home network of the UE is a PLMN network;
the visited network of the UE and the home network of the UE are two different networks;
a local configuration of the UE indicates to generate the first identifier; or
the UE receives the second indication from the AMF, where the second indication indicates to generate the first identifier.

It should be noted that step 414 may be performed at any moment after step 401.

415: The UE generates the second intermediate key K_{AMF} based on the first identifier.

In this embodiment, the UE generates the second intermediate key K_{AMF} based on the first identifier. To be specific, the UE generates the second intermediate key K_{AMF} based on the first intermediate key K_{SEAF}, the first identifier, and the anti bidding down between architectures parameter ABBA. Alternatively, the UE generates the second intermediate key K_{AMF} based on the first intermediate key K_{SEAF}, the first identifier, a length of the first identifier, the ABBA, and a length of the ABBA.

The UE generates a NAS key based on the second intermediate key K_{AMF}, to protect a NAS communication message between the UE and the AMF.

The UE generates the first intermediate key K_{SEAF}. For details, refer to related descriptions in FIG. 1b and FIG. 1c. Details are not described herein again.

Optionally, the UE may further generate, based on the received RAND in a manner the same as that on the network side, the authentication vector or the part of the authentication vector used in the authentication.

It should be noted that step 415 may be performed at any moment after step 408.

In an optional implementation, after step 413, the AMF may send a service request to the UDM, where the service request carries the first identifier. Specifically, a service requested by the AMF from the UDM includes:
(A) a subscription data management service (for example, a Nudm_SubscriberDataManagement service), used by the AMF to request the UDM to obtain the subscription data of the UE, used by the AMF to request the UDM to subscribe to a notification of a UE data change, used by the AMF to request the UDM to unsubscribe to the notification of the UE data change, used by the AMF to request the UDM to subscribe to a notification of a data change, and the like; and
(B) a UE context management service (for example, a Nudm_UEContextManagement service), used to request AMF registration for 3 GPP access, request AMF registration for non-3 GPP access, request AMF deregistration for 3GPP access, request AMF deregistration for non-3GPP access, request to update an AMF registration parameter, request AMF deregistration, and the like.

After the UDM receives the service request that is sent by the AMF and that carries the first identifier, the UDM finds the corresponding SUPI based on the first identifier, and optionally, finds the subscription data of the UE corresponding to the SUPI.

In an optional implementation, after step 413, the SMF may send a service request to the UDM, where the service request carries the first identifier. Specifically, a service requested by the SMF from the UDM includes:
(A) a subscription data management service (for example, a Nudm_SubscriberDataManagement service), used by the SMF to request the UDM to obtain the subscription data of the UE, used by the SMF to request the UDM to subscribe to a notification of a UE data change, used by the SMF to request the UDM to unsubscribe to the notification of the UE data change, used by the SMF to request the UDM to subscribe to a notification of a data change, and the like; and
(B) a UE context management service (for example, a Nudm_UEContextManagement service), used to request to create new registration or SMF registration, used to request SMF deregistration, and the like.

After the UDM receives the service request that is sent by the SMF and that carries the first identifier, the UDM finds the corresponding SUPI based on the first identifier, and optionally, finds the subscription data of the UE corresponding to the SUPI.

In an optional implementation, after step 413, the SEAF may determine to initiate primary authentication, and the SEAF sends the first authentication request information to the AUSF. The first authentication request message carries the first identifier. After receiving the first authentication request message that carries the first identifier, the AUSF sends the authentication vector request message to the UDM. The authentication vector request message carries the received first identifier. The UDM finds, based on the first identifier, the corresponding SUPI and the subscription data of the UE corresponding to the SUPI, and generates the authentication vector. Then, the UDM sends the SUPI to the AUSF.

In this embodiment of this application, the UDM generates the first identifier for identifying the terminal device. The home network sends (by the UDM by using the AUSF) the first identifier to the visited network (the AMF or the SEAF), to prevent the home network from sending (by the UDM by using the AUSF) the SUPI of the UE to the visited network (the AMF or the SEAF). Because the SUPI is privacy information of the UE, leaking of privacy information of the terminal device is avoided. Therefore, communication security is improved.

The embodiments shown in FIG. 3 and FIG. 4 separately describe related steps of generating the first identifier by the AUSF or the UDM and replacing the original SUPI with the first identifier to perform communication. In addition, that the home network and the visited network exchange messages to determine authentication methods of the home network and the visited network is described. In addition to the communication methods described in the embodiments in FIG. 3 and FIG. 4, an embodiment of this application further provides a communication method. An authentication method between the home network and the visited network is determined through message exchange on a basis that a network-supported authentication method is preconfigured for the AMF or the UDM. The following provides descriptions with reference to the accompanying drawings. It should be noted that the method may be combined with the related steps of generating the first identifier by the AUSF or the UDM and replacing the original SUPI with the first identifier to perform communication described in the embodiment in FIG. 3 or FIG. 4. In this case, that the home network and the visited network exchange messages to determine authentication methods of the home network and the visited network described in the embodiment in FIG. 3 or FIG. 4 (for example, the foregoing steps 302 to 306) is replaced with this method.

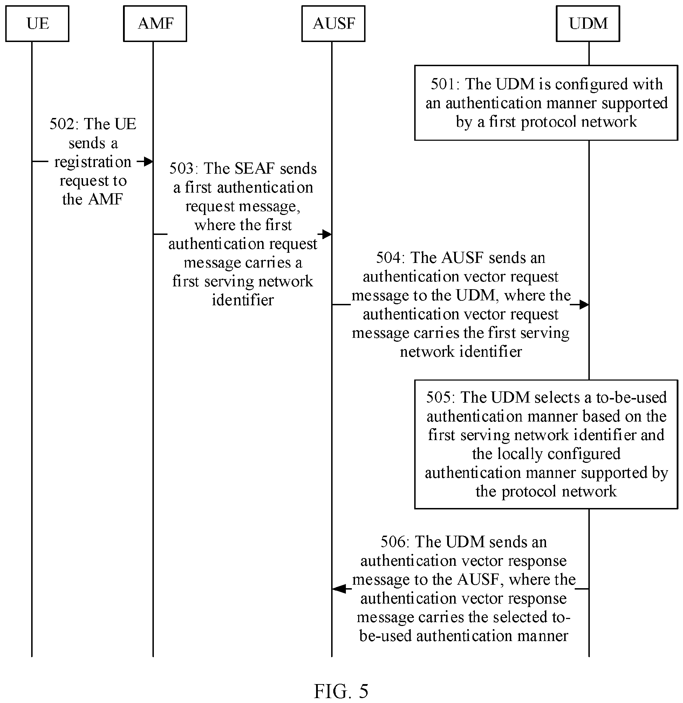

FIG. 5 is a schematic diagram of an embodiment of another communication method according to an embodiment of this application. The another communication method provided in this embodiment of this application includes the following steps.

501: A UDM is configured with an authentication manner supported by a first protocol network.

In this embodiment, the first protocol network is any network that can interwork with a network in which the UDM is located, for example, a visited network of the UE. In this embodiment of this application, the authentication manner supported by the first protocol network is also referred to as an authentication manner supported by an AMF or an SEAF, an authentication manner supported by the visited network of the UE, or an authentication manner supported by a serving network of the UE.

When the first protocol network is a PLMN, an identifier of the first protocol network includes a PLMN ID but does not include an NID, and the PLMN ID identifies the first protocol network.

When the first protocol network is an SNPN, an identifier of the first protocol network includes a PLMN ID and an NID. The PLMN ID and the NID identify the first protocol network.

Specifically, the authentication manner supported by the first protocol network is configured in the UDM in a form of a correspondence list. The correspondence list includes a correspondence between the identifier of the first protocol network and the authentication manner supported by the first protocol network. Optionally, the correspondence list may be preconfigured in the UDM.

For example, the correspondence list is shown in Table 3.

**Table 3**

| Identifier of the first protocol network | Authentication manner supported by the first protocol network |
|---|---|
| PLMN ID 1 | 5G AKA |
| (PLMN ID 2, NID 2) | EAP-AKA' |
| (PLMN ID 2, NID 3) | 5G AKA and EAP-AKA' |

502: The UE sends a registration request to the AMF.

In this embodiment, this step is similar to step 401. Details are not described herein again.

503: The SEAF sends a first authentication request message, where the first authentication request message carries a first serving network identifier.

In this embodiment, this step is the same as step 402. Details are not described herein again.

504: An AUSF sends an authentication vector request message to the UDM, where the authentication vector request message carries the first serving network identifier.

In this embodiment, this step is the same as step 403. Details are not described herein again.

505: The UDM selects authentication manneran authentication manner based on the first serving network identifier and the locally configured authentication manner supported by the first protocol network.

In this embodiment, after receiving the first serving network identifier, the UDM selects the authentication manner based on the first serving network identifier, the locally configured identifier of the first protocol network, and the authentication manner supported by the first protocol network. Specifically, the UDM determines, based on the first serving network identifier and from the configured correspondence list, the identifier that is consistent with the first serving network identifier and that is of the first protocol network, and further determines the authentication manner supported by the first protocol network. The correspondence list includes the correspondence between the identifier of the first protocol network and the authentication manner supported by the first protocol network. The authentication manner supported by the first protocol network may be the authentication manner supported by the serving network of the UE, the authentication manner supported by the AMF, or the authentication manner supported by an SEAF. The UDM selects the authentication manner based on the authentication manner supported by the first protocol network.

506: The UDM sends an authentication vector response message to the AUSF, where the authentication vector response message carries the selected authentication manner.

In this embodiment of this application, the UDM is preconfigured with the authentication manner supported by the first protocol network. After receiving the first serving network identifier from the AMF or the SEAF, the UDM may select the authentication manner based on the locally configured authentication manner supported by the first protocol network. The home network and the visited network exchange messages to determine authentication methods of the home network and the visited network. This avoids a result of an authentication failure that is caused when the home network selects an authentication method that is not supported by the visited network.

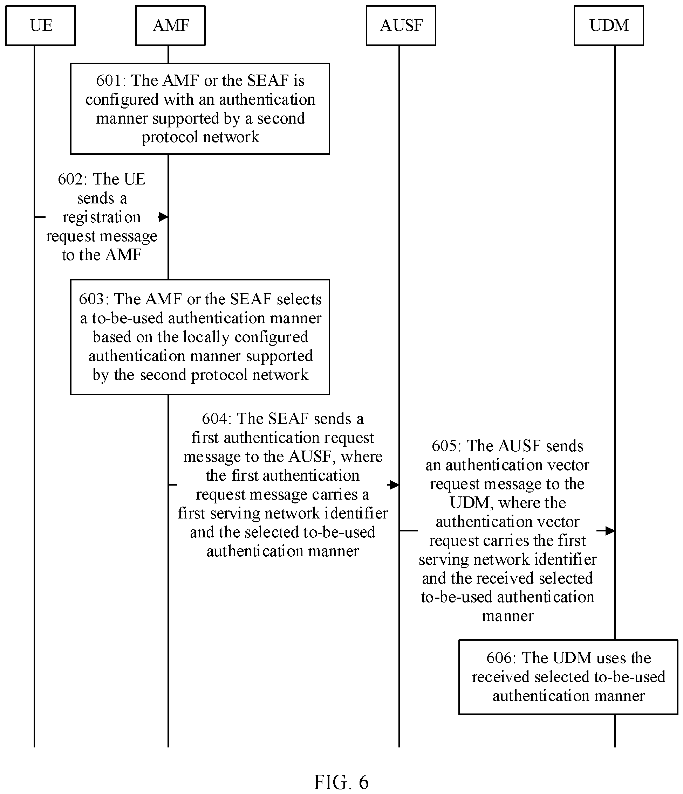

FIG. 6 is a schematic diagram of an embodiment of another communication method according to an embodiment of this application. The another communication method provided in this embodiment of this application includes the following steps.

601: An AMF or an SEAF is configured with an authentication manner supported by a second protocol network.

In this embodiment, the second protocol network is any network that can interwork with the AMF or the SEAF, for example, a home network of UE. In this embodiment of this application, the authentication manner supported by the second protocol network is also referred to as an authentication manner supported by an AUSF, an authentication manner supported by a UDM, or an authentication manner supported by the home network.

When the second protocol network is a PLMN, an identifier of the protocol network includes a PLMN ID but does not include an NID, and the PLMN ID identifies the second protocol network.

When the second protocol network is an SNPN, an identifier of the protocol network includes a PLMN ID and an NID. The PLMN ID and the NID together identify the second protocol network.

Specifically, the authentication manner supported by the second protocol network is configured in the AMF or the SEAF in a form of a correspondence list. The correspondence list includes a correspondence between the identifier of the second protocol network and the authentication manner supported by the second protocol network. Optionally, the correspondence list may be preconfigured in the AMF or the SEAF.

For example, the correspondence list is shown in Table 4.

**Table 4**

| Identifier of the second protocol network | Authentication manner supported by the second protocol network |
|---|---|
| PLMN ID 1 | 5G AKA |
| (PLMN ID 2, NID 2) | EAP-AKA' |
| (PLMN ID 2, NID 3) | 5G AKA and EAP-AKA' |

602: The UE sends a registration request message to the AMF.

In this embodiment, this step is similar to step 401. Details are not described herein again.

603: The AMF or the SEAF selects authentication manneran authentication manner based on the locally configured authentication manner supported by the second protocol network.

In this embodiment, after receiving the registration request message, the AMF first notifies the SEAF of the registration request message. Then, the AMF or the SEAF determines an identifier of the home network of the UE. If the AMF or the SEAF receives an SUCI, the AMF or the SEAF obtains, from the SUCI, the identifier of the home network of the UE. The AMF or the SEAF may alternatively obtain, from a context of the UE, the identifier of the home network of the UE. For example, the context of the UE includes an identifier (for example, an SUPI) of the UE, and the identifier of the UE includes the identifier of the home network of the UE.

The AMF or the SEAF selects the authentication manner based on the locally configured authentication manner supported by the second protocol network. Specifically, the AMF or the SEAF determines, based on the correspondence list (where the correspondence list includes the identifier of the second protocol network and the authentication manner supported by the second protocol network), the identifier that is consistent with the identifier of the home network of the UE and that is of the second protocol network, to determine the authentication manner supported by the second protocol network. The authentication manner supported by the second protocol network is the authentication manner supported by the home network of the UE, the authentication manner supported by the AUSF, or the authentication manner supported by the UDM.

604: The SEAF sends a first authentication request message to the AUSF, where the first authentication request message carries the first serving network identifier and the selected authentication manner.

In this embodiment, after receiving the registration request, the AMF or the SEAF initiates an authentication procedure to the home network of the UE. The home network may be a PLMN or an SNPN.

Specifically, the AMF sends the first authentication request to the AUSF, where the first authentication request carries the first serving network identifier. The first authentication request message is for invoking an authentication request service provided by the AUSF. The first authentication request message further carries the selected authentication manner.

For example, the first authentication request is a Nausf_UEAuthentication_Authenticate Request message.

In another optional implementation, the selected authentication manner may alternatively be carried in another independent message.

605: The AUSF sends an authentication vector request message to the UDM, where the authentication vector request message carries the first serving network identifier and the received selected authentication manner.

In this embodiment, the AUSF sends the authentication vector (authentication vector, AV) request message to the UDM. The authentication vector request message is for requesting an authentication vector, invoking an authentication service provided by the UDM, or invoking an authentication vector service provided by the UDM. Specifically, the authentication vector request message carries the received selected authentication manner and the first serving network identifier.

Optionally, the authentication vector request is a Nudm_UEAuthentication_Get Request message.

606: The UDM uses the received selected authentication manner.

In this embodiment, the UDM generates the authentication vector by using the received selected authentication manner. For example, when the received selected authentication manner is 5G AKA, the UDM generates a first authentication vector. When the received selected authentication manner is EAP-AKA', the UDM generates a second authentication vector. For the first authentication vector and the second authentication vector, refer to related descriptions in FIG. 1c. Details are not described herein again.

After step 606, the communication procedure continues, for example, the foregoing steps 306 to 317, the foregoing steps 407 to 415, or related steps of performing communication by using an SUPI in a solution in a conventional technology. This is not limited herein.

In this embodiment of this application, the AMF is preconfigured with the network identifier and the authentication manner associated with the network identifier, or the authentication manner. The AMF may select the authentication manner based on the first serving network identifier, the locally configured network identifier, and the authentication manner associated with the network identifier. Alternatively, the AMF selects the authentication manner based on the configured authentication manner. The AMF sends the selected authentication manner to the AUSF. The home network and the visited network exchange messages to determine authentication methods of the home network and the visited network. This avoids a result of an authentication failure that is caused when the home network selects an authentication method that is not supported by the visited network.

The foregoing mainly describes the solutions provided in embodiments of this application from the perspective of the methods. It can be understood that, to implement the foregoing functions, a communication apparatus includes corresponding hardware structures and/or software modules for performing the functions. A person of ordinary skill in the art should easily be aware that, in combination with the examples described in embodiments disclosed in this specification, modules, algorithms and steps may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into function modules based on the foregoing method examples. For example, each function module may be obtained through division based on each function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used.

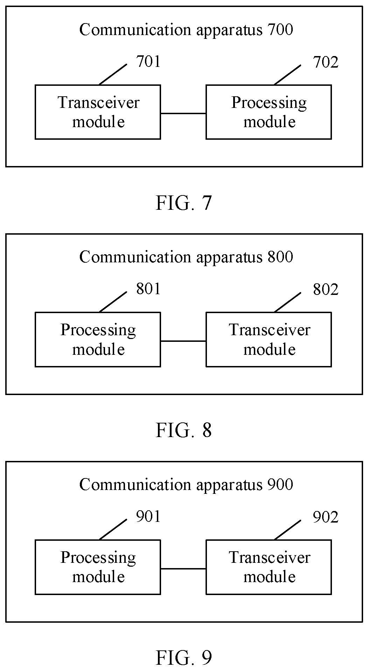

The following describes in detail a communication apparatus in this application. FIG. 7 is a schematic diagram of an embodiment of the communication apparatus according to an embodiment of this application. The communication apparatus 700 may be deployed in a network device. The communication apparatus 700 includes:
a transceiver module 701, configured to receive a subscription permanent identifier SUPI of a terminal device that is sent by unified data management UDM, where the SUPI identifies the UE; and
a processing module 702, configured to generate a first identifier based on the SUPI.

The transceiver module 701 is further configured to send the first identifier to a security anchor function SEAF.

The processing module 702 is further configured to generate a second intermediate key K_{AMF} based on a first intermediate key K_{SEAF}, the first identifier, and an anti bidding down between architectures parameter ABBA.

The transceiver module 701 is further configured to send the second intermediate key K_{AMF} to an access and mobility management function AMF.

The processing module 702 is further configured to generate a non-access stratum NAS key based on the second intermediate key K_{AMF}, where the NAS key is for protecting a NAS message.

In some optional embodiments of this application,

The transceiver module 701 is further configured to send the first identifier to the UDM; and
the transceiver module 701 is further configured to receive the first identifier, and store a correspondence between the first identifier and the SUPI.

In some optional embodiments of this application,
the transceiver module 701 is further configured to receive a first serving network identifier sent by the AMF; and
that a processing module 702, configured to generate a first identifier specifically includes:
   the processing module 702 is configured to generate the first identifier when the first serving network identifier includes a public land mobile network identifier PLMN ID and a network identifier NID; or
   the processing module 702 is configured to generate the first identifier when the first serving network identifier includes a PLMN ID and an NID, and an identifier of a network in which an authentication server module function AUSF is located includes the PLMN ID but does not include the NID.

In some optional embodiments of this application,
the processing module 702 is further configured to generate a third intermediate key CK and a fourth intermediate key IK based on a long term key K of the UE;
the processing module 702 is further configured to generate a fifth intermediate key K_{AUSF} based on the third intermediate key CK and the fourth intermediate key IK;
the transceiver module 701 is further configured to send the fifth intermediate key K_{AUSF} to the AUSF;
the processing module 702 is further configured to generate the first intermediate key K_{SEAF} based on the fifth intermediate key K_{AUSF}; and
the processing module 702 is further configured to send the first intermediate key K_{SEAF} to the SEAF.

In some optional embodiments of this application,
the processing module 702 is further configured to generate a third intermediate key CK and a fourth intermediate key IK based on a long term key K of the UE;
the processing module 702 is further configured to generate a sixth intermediate key CK' and a seventh intermediate key IK' based on the third intermediate key CK and the fourth intermediate key IK;
the transceiver module 701 is further configured to send the sixth intermediate key CK' and the seventh intermediate key IK' to the AUSF;
the processing module 702 is further configured to generate a fifth intermediate key K_{AUSF} based on the sixth intermediate key CK' and the seventh intermediate key IK', and generate the first intermediate key K_{SEAF} based on the fifth intermediate key K_{AUSF}; and
the transceiver module 701 is further configured to send the first intermediate key K_{SEAF} to the SEAF.

In some optional embodiments of this application,
the transceiver module 701 is further configured to receive an authentication manner that is sent by the AMF and that is supported by the AMF;
the transceiver module 701 is further configured to send, to the UDM, the received authentication manner that is supported by the AMF;
the processing module 702 is further configured to select authentication manneran authentication manner based on the authentication manner that is supported by the AMF;
the transceiver module 701 is further configured to send the selected authentication manner to the AUSF; and
the transceiver module 701 is further configured to send an authentication response to the AMF based on the selected authentication manner.

FIG. 8 is a schematic diagram of another embodiment of a communication apparatus according to an embodiment of this application. The communication apparatus 800 may be deployed in a terminal device. The communication apparatus 800 includes:
a processing module 801, configured to generate a first identifier based on a subscription permanent identifier SUPI of a terminal device.

The processing module 801 is further configured to generate a second intermediate key K_{AMF} based on a first intermediate key K_{SEAF}, the first identifier, and an anti bidding down between architectures parameter ABBA.

The processing module 801 is further configured to generate a NAS key based on the second intermediate key K_{AMF}, where the NAS key is for protecting a NAS message.

In some optional embodiments of this application,
a transceiver module 802, configured to send a registration request to an access and mobility management function AMF, where the registration request carries a first serving network identifier.

That a processing module 801, configured to generate a first identifier based on an SUPI specifically includes:
when determining that a second condition is satisfied, the processing module 801 generates the first identifier based on the SUPI; otherwise, the UE does not generate the first identifier. The second condition includes:
the first serving network identifier includes a PLMN ID and an NID;
the first serving network identifier includes a PLMN ID and an NID, and a second serving network identifier includes the PLMN ID but does not include the NID;
a visited network of the UE is an SNPN network;
a visited network of the UE is an SNPN network, and a home network of the UE is a PLMN network;
a visited network of the UE and a home network of the UE are two different networks;
a local configuration of the UE indicates to generate the first identifier; or
the UE receives a second indication from the AMF, where the second indication indicates the UE to generate the first identifier.

In some optional embodiments of this application,
the transceiver module 802 is further configured to obtain a third intermediate key CK and a fourth intermediate key IK;
the processing module 801 is further configured to generate a fifth intermediate key K_{AUSF} based on the third intermediate key CK and the fourth intermediate key IK; and
the processing module 801 is further configured to generate the first intermediate key K_{SEAF} based on the fifth intermediate key K_{AUSF}.

In some optional embodiments of this application,
the transceiver module 802 is further configured to obtain a third intermediate key CK and a fourth intermediate key IK;
the processing module 801 is further configured to generate a sixth intermediate key CK' and a seventh intermediate key IK' based on the third intermediate key CK and the fourth intermediate key IK;
the processing module 801 is further configured to generate a fifth intermediate key K_{AUSF} based on the sixth intermediate key CK' and the seventh intermediate key IK'; and
the processing module 801 is further configured to generate the first intermediate key K_{SEAF} based on the fifth intermediate key K_{AUSF}.

In some optional embodiments of this application,
the processing module 801 is further configured to generate the second intermediate key K_{AMF} based on the first intermediate key K_{SEAF}, the first identifier, a length of the first identifier, the ABBA, and a length of the ABBA.

FIG. 9 is a schematic diagram of an embodiment of a communication apparatus according to an embodiment of this application. The communication apparatus 900 may be deployed in a network device. The communication apparatus 900 includes:
a processing module 901, configured to generate a first identifier based on an SUPI; and
a transceiver module 902, configured to send the first identifier to an authentication server function network element AUSF.

The transceiver module 902 is further configured to send the first identifier to a security anchor function network element SEAF.

The processing module 901 is further configured to generate a second intermediate key K_{AMF} based on a first intermediate key K_{SEAF}, the first identifier, and an anti bidding down between architectures parameter ABBA.

The transceiver module 902 is further configured to send the first identifier to a mobility management function network element AMF.

The processing module 901 is further configured to generate a non-access stratum NAS key based on the second intermediate key, where the NAS key is for protecting a NAS message.

In some optional embodiments of this application,
the transceiver module 902 is further configured to receive a first serving network identifier sent by the AMF; and
the transceiver module 902 is further configured to send the first serving network identifier to a UDM.

That a processing module 901, configured to generate a first identifier specifically includes:
when a third condition is satisfied, the processing module 901 is configured to generate the first identifier based on the SUPI of UE. The third condition includes:
the first serving network identifier includes a PLMN ID and an NID;
the first serving network identifier includes a PLMN ID and an NID, and a second serving network identifier includes the PLMN ID but does not include the NID;
a visited network of the UE is an SNPN network;
a visited network of the UE is an SNPN network, and a home network of the UE is a PLMN network;
a visited network of the UE and a home network of the UE are two different networks; or
a local configuration of the UDM indicates to generate the first identifier.

In some optional embodiments of this application,
the processing module 901 is further configured to store a correspondence between the first identifier and the SUPI.

In some optional embodiments of this application,
the processing module 901 is further configured to generate a third intermediate key CK and a fourth intermediate key IK based on a long term key K of the UE;
the processing module 901 is further configured to generate a fifth intermediate key K_{AUSF} based on the third intermediate key CK and the fourth intermediate key IK;
the transceiver module 902 is further configured to send the fifth intermediate key K_{AUSF} to the AUSF;
the processing module 901 is further configured to generate the first intermediate key K_{SEAF} based on the fifth intermediate key K_{AUSF}; and
the transceiver module 902 is further configured to send the first intermediate key K_{SEAF} to the SEAF.

In some optional embodiments of this application,
the processing module 901 is further configured to generate a third intermediate key CK and a fourth intermediate key IK based on a long term key K of the UE;
the processing module 901 is further configured to generate a sixth intermediate key CK' and a seventh intermediate key IK' based on the third intermediate key CK and the fourth intermediate key IK;
the transceiver module 902 is further configured to send the sixth intermediate key CK' and the seventh intermediate key IK' to the AUSF;
the processing module 901 is further configured to generate a fifth intermediate key K_{AUSF} based on the sixth intermediate key CK' and the seventh intermediate key IK', and generate the first intermediate key K_{SEAF} based on the fifth intermediate key K_{AUSF}; and
the transceiver module 902 is further configured to send the first intermediate key K_{SEAF} to the SEAF.

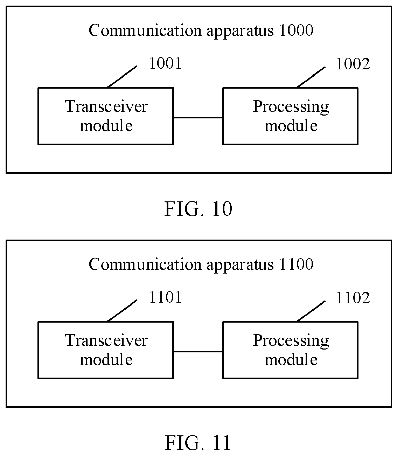

FIG. 10 is a schematic diagram of an embodiment of a communication apparatus according to an embodiment of this application. The communication apparatus 1000 may be deployed in a network device. The communication apparatus 1000 includes:
a transceiver module 1001, configured to be configured with an authentication manner supported by a first protocol network, where
the transceiver module 1001 is further configured to receive a first serving network identifier sent by an authentication server function network element AUSF; and
a processing module 1002, configured to select authentication manneran authentication manner based on the first serving network identifier and the locally configured authentication manner supported by the first protocol network, where
the transceiver module 1001 is further configured to send the selected authentication manner to the AUSF.

The transceiver module 1001 is further configured to send, to a UDM, an authentication vector request message carrying the first serving network identifier, where the authentication vector request message is for requesting to invoke an authentication vector service or an authentication service that is provided by the UDM.

In some optional embodiments of this application,
the transceiver module 1001 is further configured to send an authentication vector response message to the AUSF, where the authentication vector response message carries the selected authentication manner. The authentication vector response message is for responding to the received authentication vector request message.

FIG. 11 is a schematic diagram of an embodiment of a communication apparatus according to an embodiment of this application. The communication apparatus 1100 may be deployed in a network device. The communication apparatus 1100 includes:
a transceiver module 1101, configured to receive a first authentication manner sent by an AUSF; and
a processing module 1102, configured to select authentication manneran authentication manner based on the received first authentication manner, where
the transceiver module 1101 is further configured to send the selected authentication manner to the AUSF.

In some optional embodiments of this application, the communication apparatus 1100 may include:
the transceiver module 1101 is further configured to send an authentication vector request message to a UDM, where the authentication vector request message is for requesting to invoke an authentication vector service or an authentication service that is provided by the UDM, and the authentication vector request message carries the first authentication manner.

In some optional embodiments of this application, the communication apparatus 1100 may include:
the transceiver module 1101 is further configured to send an authentication vector response message to the AUSF, where the authentication vector response message carries the selected authentication manner. The authentication vector response message is for responding to the received authentication vector request message.

In some optional embodiments of this application, the communication apparatus 1100 may include:
the transceiver module 1101 is further configured to receive the first authentication manner sent by an SEAF.

The communication apparatus in the foregoing embodiments may be a network device, or may be a chip used in the network device, or another combined part, component, or the like that can implement a function of the network device. The communication apparatus may alternatively be a terminal device, or may be a chip used in the terminal device, or another combined part, component, or the like that can implement a function of the foregoing terminal device. When the communication apparatus is a network device, the receiving module and the sending module may be a transceiver. The transceiver may include an antenna, a radio frequency circuit, and the like. The processing module may be a processor, for example, a baseband chip. When the communication apparatus is a component having a function of the network device, the receiving module and the sending module may be radio frequency units, and the processing module may be a processor. When the communication apparatus is a terminal device, the receiving module and the sending module may be a transceiver. The transceiver may include an antenna, a radio frequency circuit, and the like. The processing module may be a processor, for example, a baseband chip. When the communication apparatus is a component having a function of the terminal device, the receiving module and the sending module may be radio frequency units, and the processing module may be a processor. When the communication apparatus is a chip system, the receiving module may be an input port of the chip system, the sending module may be an output interface of the chip system, and the processing module may be a processor of the chip system, for example, a central processing unit (central processing unit, CPU).

In this embodiment of this application, the memory included in the network device is mainly configured to store a software program and data, for example, store the first identifier described in the foregoing embodiments. The network device further has the following functions.

The network device includes:
a transceiver, configured to receive a subscription permanent identifier SUPI of a terminal device that is sent by unified data management UDM, where the SUPI identifies the UE; and
a processor, configured to generate a first identifier based on the SUPI.

The transceiver is further configured to send the first identifier to a security anchor function SEAF.

The processor is further configured to generate a second intermediate key K_{AMF} based on a first intermediate key K_{SEAF}, the first identifier, and an anti bidding down between architectures parameter ABBA.

The transceiver is further configured to send the second intermediate key K_{AMF} to an access and mobility management function AMF.

The processing is further configured to generate a non-access stratum NAS key based on the second intermediate key K_{AMF}, where the NAS key is for protecting a NAS message.

In some optional embodiments of this application,
the transceiver is further configured to send the first identifier to the UDM; and
the transceiver is further configured to receive the first identifier, and store a correspondence between the first identifier and the SUPI.

In some optional embodiments of this application,
the transceiver is further configured to receive a first serving network identifier sent by the AMF; and
that a processor, configured to generate a first identifier specifically includes:
   the processor is configured to generate the first identifier when the first serving network identifier includes a public land mobile network identifier PLMN ID and a network identifier NID; or
   the processor is configured to generate the first identifier when the first serving network identifier includes a PLMN ID and an NID, and an identifier of a network in which an authentication server function AUSF is located includes the PLMN ID but does not include the NID.

In some optional embodiments of this application,
the processor is further configured to generate a third intermediate key CK and a fourth intermediate key IK based on a long term key K of the UE;
the processor is further configured to generate a fifth intermediate key K_{AUSF} based on the third intermediate key CK and the fourth intermediate key IK;
the transceiver is further configured to send the fifth intermediate key K_{AUSF} to the AUSF;
the processor is further configured to generate the first intermediate key K_{SEAF} based on the fifth intermediate key K_{AUSF}; and
the processor is further configured to send the first intermediate key K_{SEAF} to the SEAF.

In some optional embodiments of this application,
the processor is further configured to generate a third intermediate key CK and a fourth intermediate key IK based on a long term key K of the UE;
the processor is further configured to generate a sixth intermediate key CK' and a seventh intermediate key IK' based on the third intermediate key CK and the fourth intermediate key IK;
the transceiver is further configured to send the sixth intermediate key CK' and the seventh intermediate key IK' to the AUSF;
the processor is further configured to generate a fifth intermediate key K_{AUSF} based on the sixth intermediate key CK' and the seventh intermediate key IK', and generate the first intermediate key K_{SEAF} based on the fifth intermediate key K_{AUSF}; and
the transceiver is further configured to send the first intermediate key K_{SEAF} to the SEAF.

In some optional embodiments of this application,
the transceiver is further configured to receive an authentication manner that is sent by the AMF and that is supported by the AMF;
the transceiver is further configured to send, to the UDM, the received authentication manner that is supported by the AMF;
the processor is further configured to select authentication manneran authentication manner based on the authentication manner that is supported by the AMF;
the transceiver is further configured to send the selected authentication manner to the AUSF; and
the transceiver is further configured to send an authentication response to the AMF based on the selected authentication manner.

An embodiment of this application provides a terminal device. The terminal device includes:
a processor, further configured to generate a first identifier based on a subscription permanent identifier SUPI of the terminal device.

The processor is further configured to generate a second intermediate key K_{AMF} based on a first intermediate key K_{SEAF}, the first identifier, and an anti bidding down between architectures parameter ABBA.

The processor is further configured to generate a NAS key based on the second intermediate key K_{AMF}, where the NAS key is for protecting a NAS message.

In some optional embodiments of this application, the terminal device further includes a transceiver.

The transceiver is further configured to send a registration request to an access and mobility management function AMF, where the registration request carries a first serving network identifier.

That a processor, configured to generate a first identifier based on an SUPI specifically includes:
when determining that a second condition is satisfied, the processor generates the first identifier based on the SUPI; otherwise, the processor does not generate the first identifier. The second condition includes:
the first serving network identifier includes a PLMN ID and an NID;
the first serving network identifier includes a PLMN ID and an NID, and a second serving network identifier includes the PLMN ID but does not include the NID;
a visited network of the UE is an SNPN network;
a visited network of the UE is an SNPN network, and a home network of the UE is a PLMN network;
a visited network of the UE and a home network of the UE are two different networks;
a local configuration of the UE indicates to generate the first identifier; or
the UE receives a second indication from the AMF, where the second indication indicates the UE to generate the first identifier.

In some optional embodiments of this application,
the transceiver is further configured to obtain a third intermediate key CK and a fourth intermediate key IK;
the processor is further configured to generate a fifth intermediate key K_{AUSF} based on the third intermediate key CK and the fourth intermediate key IK;
the processor is further configured to generate the first intermediate key K_{SEAF} based on the fifth intermediate key K_{AUSF}.

In some optional embodiments of this application,
the transceiver is further configured to obtain a third intermediate key CK and a fourth intermediate key IK;
the processor is further configured to generate a sixth intermediate key CK' and a seventh intermediate key IK' based on the third intermediate key CK and the fourth intermediate key IK;
the processor is further configured to generate a fifth intermediate key K_{AUSF} based on the sixth intermediate key CK' and the seventh intermediate key IK'; and
the processor is further configured to generate the first intermediate key K_{SEAF} based on the fifth intermediate key K_{AUSF}.

In some optional embodiments of this application,
the processor is further configured to generate the second intermediate key K_{AMF} based on the first intermediate key K_{SEAF}, the first identifier, a length of the first identifier, the ABBA, and a length of the ABBA.

An embodiment of this application provides a network device. The network device includes:
a processor, configured to generate a first identifier based on an SUPI; and
a transceiver, configured to send the first identifier to an authentication server function network element AUSF.

The transceiver is further configured to send the first identifier to a security anchor function network element SEAF.

The processor is further configured to generate a second intermediate key K_{AMF} based on a first intermediate key K_{SEAF}, the first identifier, and an anti bidding down between architectures parameter ABBA.

The transceiver is further configured to send the second intermediate key to a mobility management function network element AMF.

The processor is further configured to generate a non-access stratum NAS key based on the second intermediate key, where the NAS key is for protecting a NAS message.

In some optional embodiments of this application,
the transceiver is further configured to receive a first serving network identifier sent by the AMF; and
the transceiver is further configured to send the first serving network identifier to a UDM.

That a processor, configured to generate a first identifier specifically includes:
when a third condition is satisfied, the processor is configured to generate the first identifier based on the SUPI of UE. The third condition includes:
the first serving network identifier includes a PLMN ID and an NID;
the first serving network identifier includes a PLMN ID and an NID, and a second serving network identifier includes the PLMN ID but does not include the NID;
a visited network of the UE is an SNPN network;
a visited network of the UE is an SNPN network, and a home network of the UE is a PLMN network;
a visited network of the UE and a home network of the UE are two different networks;
a local configuration of the UDM indicates to generate the first identifier.

In some optional embodiments of this application,
the processor is further configured to store a correspondence between the first identifier and the SUPI.

In some optional embodiments of this application,
the processor is further configured to generate a third intermediate key CK and a fourth intermediate key IK based on a long term key K of the UE;
the processor is further configured to generate a fifth intermediate key K_{AUSF} based on the third intermediate key CK and the fourth intermediate key IK;
the transceiver is further configured to send the fifth intermediate key K_{AUSF} to the AUSF;
the processor is further configured to generate the first intermediate key K_{SEAF} based on the fifth intermediate key K_{AUSF}; and
the transceiver is further configured to send the first intermediate key K_{SEAF} to the SEAF.

In some optional embodiments of this application,
the processor is further configured to generate a third intermediate key CK and a fourth intermediate key IK based on a long term key K of the UE;
the processor is further configured to generate a sixth intermediate key CK' and a seventh intermediate key IK' based on the third intermediate key CK and the fourth intermediate key IK;
the transceiver is further configured to send the sixth intermediate key CK' and the seventh intermediate key IK' to the AUSF;
the processor is further configured to generate a fifth intermediate key K_{AUSF} based on the sixth intermediate key CK' and the seventh intermediate key IK', and generate the first intermediate key K_{SEAF} based on the fifth intermediate key K_{AUSF}; and
the transceiver is further configured to send the first intermediate key K_{SEAF} to the SEAF.

An embodiment of this application provides a network device. The network device includes:
a transceiver, configured to be configured with an authentication manner supported by a first protocol network, where
the transceiver is further configured to receive a first serving network identifier sent by an authentication server function network element AUSF; and
a processor, configured to select authentication manneran authentication manner based on the first serving network identifier and the locally configured authentication manner supported by the first protocol network, where
the transceiver is further configured to send the selected authentication manner to the AUSF.

In some optional embodiments of this application,
the transceiver is further configured to send, to a UDM, an authentication vector request message carrying the first serving network identifier, where the authentication vector request message is for requesting to invoke an authentication vector service or an authentication service that is provided by the UDM.

In some optional embodiments of this application,
the transceiver is further configured to send an authentication vector response message to the AUSF, where the authentication vector response message carries the selected authentication manner. The authentication vector response message is for responding to the received authentication vector request message.

An embodiment of this application provides a network device. The network device includes:
a transceiver, configured to receive a first authentication manner sent by an AUSF; and
a processor, configured to select authentication manneran authentication manner based on the received first authentication manner, where
the transceiver is further configured to send the selected authentication manner to the AUSF.

In some optional embodiments of this application, that the UDM receives a first authentication manner sent by an AUSF may include:
the transceiver is further configured to send an authentication vector request message to a UDM, where the authentication vector request message is for requesting to invoke an authentication vector service or an authentication service that is provided by the UDM, and the authentication vector request message carries the first authentication manner.

In some optional embodiments of this application, that the UDM sends the selected authentication manner to the AUSF may include:
the transceiver is further configured to send an authentication vector response message to the AUSF, where the authentication vector response message carries the selected authentication manner. The authentication vector response message is for responding to the received authentication vector request message.

In some optional embodiments of this application, before that the UDM receives a first authentication manner sent by an AUSF, the network device may include:
the transceiver is further configured to receive the first authentication manner sent by an SEAF.

An embodiment of this application further provides a processing apparatus, including a processor and an interface. The processor is configured to perform the communication method in any one of the foregoing method embodiments.

It should be understood that the processing apparatus may be a chip. The processor may be implemented by hardware, or may be implemented by software. When the processor is implemented by the hardware, the processor may be a logic circuit, an integrated circuit, or the like. When the processor is implemented by the software, the processor may be a general-purpose processor. The general-purpose processor is implemented by reading software code stored in a memory. The memory may be integrated into the processor, or may be located outside the processor and exist independently.

This application further provides a communication system, including a network device and a terminal device.

An embodiment of this application further provides a computer-readable storage medium, including instructions. When the instructions are run on a computer, the computer is enabled to perform the following steps.
step A: Receive a subscription permanent identifier SUPI of a terminal device that is sent by unified data management UDM, where the SUPI identifies the UE;
step B: Generate a first identifier based on the SUPI;
step C: Send the first identifier to a security anchor function SEAF;
step D: Generate a second intermediate key K_{AMF} based on a first intermediate key K_{SEAF}, the first identifier, and an anti bidding down between architectures parameter ABBA;
step E: Send the second intermediate key K_{AMF} to an access and mobility management function AMF;
step F: Generate a non-access stratum NAS key based on the second intermediate key K_{AMF}, where the NAS key is for protecting a NAS message;
step G: Send the first identifier to the UDM;
step H: Receive the first identifier, and store a correspondence between the first identifier and the SUPI;
step I: Receive a first serving network identifier sent by the AMF;
step J: Generating a first identifier specifically includes: generate the first identifier when the first serving network identifier includes a public land mobile network identifier PLMN ID and a network identifier NID; or when the first serving network identifier includes a PLMN ID and an NID, and an identifier of a network in which an authentication server function AUSF is located includes the PLMN ID but does not include the NID;
step K: Generate a third intermediate key CK and a fourth intermediate key IK based on a long term key K of the UE;
step L: Generate a fifth intermediate key K_{AUSF} based on the third intermediate key CK and the fourth intermediate key IK;
step M: Send the fifth intermediate key K_{AUSF} to the AUSF;
step N: Generate the first intermediate key K_{SEAF} based on the fifth intermediate key K_{AUSF};
step O: Send the first intermediate key K_{SEAF} to the SEAF;
step P: Generate a third intermediate key CK and a fourth intermediate key IK based on a long term key K of the UE;
step Q: Generate a sixth intermediate key CK' and a seventh intermediate key IK' based on the third intermediate key CK and the fourth intermediate key IK;
step R: Send the sixth intermediate key CK' and the seventh intermediate key IK' to the AUSF;
step S: Generate a fifth intermediate key K_{AUSF} based on the sixth intermediate key CK' and the seventh intermediate key IK', and generate the first intermediate key K_{SEAF} based on the fifth intermediate key K_{AUSF};
step T: Send the first intermediate key K_{SEAF} to the SEAF;
step U: Receive an authentication manner that is sent by the AMF and that is supported by the AMF;
step V: Send, to the UDM, the received authentication manner that is supported by the AMF;
step W: Select authentication manneran authentication manner based on the authentication manner that is supported by the AMF;
step X: Send the selected authentication manner to the AUSF; and
step Y: Send an authentication response to the AMF based on the selected authentication manner; and/or
step Z: Generate a first identifier based on a subscription permanent identifier SUPI of a terminal device;
step AA: Generate a second intermediate key K_{AMF} based on a first intermediate key K_{SEAF}, the first identifier, and an anti bidding down between architectures parameter ABBA;
step AB: Generate a NAS key based on the second intermediate key K_{AMF}, where the NAS key is for protecting a NAS message;
step AC: Send a registration request to an access and mobility management function AMF, where the registration request carries a first serving network identifier;
step AD: Generating a first identifier based on an SUPI specifically includes:
   generate the first identifier based on the SUPI when the first serving network identifier includes a public land mobile network identifier PLMN ID and a network identifier NID; or
   generate the first identifier based on the SUPI when the first serving network identifier includes a PLMN ID and an NID, and an identifier of a network in which an AUSF is located includes the PLMN ID but does not include the NID;
step AE: Obtain a third intermediate key CK and a fourth intermediate key IK;
step AF: Generate a fifth intermediate key K_{AUSF} based on the third intermediate key CK and the fourth intermediate key IK;
step AG: Generate the first intermediate key K_{SEAF} based on the fifth intermediate key K_{AUSF};
step AH: Obtain a third intermediate key CK and a fourth intermediate key IK;
step AI: Generate a sixth intermediate key CK' and a seventh intermediate key IK' based on the third intermediate key CK and the fourth intermediate key IK;
step AJ: Generate a fifth intermediate key K_{AUSF} based on the sixth intermediate key CK' and the seventh intermediate key IK';
step AK: Generate the first intermediate key K_{SEAF} based on the fifth intermediate key K_{AUSF};
step AL: Generate the second intermediate key K_{AMF} based on the first intermediate key K_{SEAF}, the first identifier, a length of the first identifier, the ABBA, and a length of the ABBA;
step AM: Generate a first identifier based on an SUPI;
step AN: Send the first identifier to an authentication server function network element AUSF;
step AO: Send the first identifier to a security anchor function network element SEAF;
step AP: Generate a second intermediate key K_{AMF} based on a first intermediate key K_{SEAF}, the first identifier, and an anti bidding down between architectures parameter ABBA;
step AQ: Send the second intermediate key to the mobility management function network element AMF; and
step AR: Generate a non-access stratum NAS key based on the second intermediate key, where the NAS key is for protecting a NAS message.

In some optional embodiments of this application,
step AS: Generate a first identifier based on an SUPI of a terminal device UE;
step AT: Send the first identifier to an AUSF;
step AU: Send the first identifier to an SEAF;
step AV: Send the first identifier to an AMF;
step AW: Generate a second intermediate key K_{AMF} based on a first intermediate key K_{SEAF}, the first identifier, and an anti bidding down between architectures parameter ABBA;
step AX: Send the second intermediate key K_{AMF} to the AMF;
step AY: Generate a NAS key based on the second intermediate key, where the NAS key is for protecting a NAS message;
step AZ: Receive a first authentication request message sent by the AMF, where the first authentication request message carries a first serving network identifier, and the first authentication request message is for requesting to invoke an authentication service provided by the AUSF;
step BA: Send an authentication vector request message, where the authentication vector request message carries the first serving network identifier, and the authentication vector request message is for requesting to invoke an authentication vector service provided by the UDM, or requesting to invoke an authentication service provided by the UDM;
step BB: Generate the first identifier;
step BC: When a third condition is satisfied, generate the first identifier based on the SUPI of the UE;
step BD: Store a correspondence between the first identifier and the SUPI;
step BE: Generate a third intermediate key CK and a fourth intermediate key IK based on a long term key K of the UE;
step BF: Generate a fifth intermediate key K_{AUSF} based on the third intermediate key CK and the fourth intermediate key IK;
step BG: Send the fifth intermediate key K_{AUSF} to the AUSF;
step BH: Generate the first intermediate key K_{SEAF} based on the fifth intermediate key K_{AUSF};
step BI: Send the first intermediate key K_{SEAF} to the SEAF;
step BJ: Generate a third intermediate key CK and a fourth intermediate key IK based on a long term key K of the UE;
step BK: Generate a sixth intermediate key CK' and a seventh intermediate key IK' based on the third intermediate key CK and the fourth intermediate key IK;
step BL: Send the sixth intermediate key CK' and the seventh intermediate key IK' to the AUSF;
step BM: Generate a fifth intermediate key K_{AUSF} based on the sixth intermediate key CK' and the seventh intermediate key IK', and generate the first intermediate key K_{SEAF} based on the fifth intermediate key K_{AUSF};
step BN: Send the first intermediate key K_{SEAF} to the SEAF; and
step BO: Receive, from the AMF or an SMF, a service request carrying the first identifier.

In some optional embodiments of this application,
step BP: Be configured with an authentication manner supported by a first protocol network;
step BQ: Receive a first serving network identifier sent by an AUSF;
step BR: Select authentication manneran authentication manner based on the first serving network identifier and the locally configured authentication manner supported by the first protocol network;
step BS: Send the selected authentication manner to the AUSF;
step BT: Send, to the UDM, an authentication vector request message carrying the first serving network identifier, where the authentication vector request message is for requesting to invoke an authentication vector service or an authentication service that is provided by the UDM; and
step BU: Send an authentication vector response message to the AUSF, where the authentication vector response message carries the selected authentication manner, where the authentication vector response message is for responding to the received authentication vector request message.

In some optional embodiments of this application,
step BV: Receive a first authentication manner sent by an AUSF;
step BW: Select authentication manneran authentication manner based on the received first authentication manner;
step BX: Send the selected authentication manner to the AUSF;
step BY: Send an authentication vector request message to the UDM, where the authentication vector request message is for requesting to invoke an authentication vector service or an authentication service that is provided by the UDM, and the authentication vector request message carries the first authentication manner;
step BZ: Send an authentication vector response message to the AUSF, where the authentication vector response message carries the selected authentication manner, where the authentication vector response message is for responding to the received authentication vector request message; and
step CA: Receive the first authentication manner sent by an SEAF.

An embodiment of this application further provides a computer program product. The computer program product includes computer program code. When the computer program code is run on a computer, the computer is enabled to perform step A to step Y, and/or step Z to step AR, and/or step AS to step BO, and/or step BP to step BU, and/or step BV to step CA.

An embodiment of this application further provides a chip, including a memory and a processor. The memory is configured to store a computer program, and the processor is configured to invoke the computer program from the memory and run the computer program, to enable the chip to perform step A to step Y, and/or step Z to step AR, and/or step AS to step BO, and/or step BP to step BU, and/or step BV to step CA.

An embodiment of this application further provides a chip, including a processor. The processor is configured to invoke and run a computer program, to enable the chip to perform step A to step Y, and/or step Z to step AR, and/or step AS to step BO, and/or step BP to step BU, and/or step BV to step CA.

In addition, it should be noted that the described apparatus embodiment is merely an example. The units described as separate parts may or may not be physically separate, and parts displayed as units may or may not be physical units, may be located in one position, or may be distributed on a plurality of network units. Some or all the modules may be selected according to actual needs to achieve the objectives of the solutions of embodiments. In addition, in the accompanying drawings of the apparatus embodiments provided by this application, connection relationships between modules indicate that the modules have communication connections with each other, which may be specifically implemented as one or more communication buses or signal cables.

Based on the description of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Generally, any functions that can be performed by a computer program can be easily implemented by using corresponding hardware. Moreover, a specific hardware structure used to achieve a same function may be in various forms, for example, in a form of an analog circuit, a digital circuit, or a dedicated circuit. However, as for this application, software program implementation is a better implementation in most cases. Based on such an understanding, the technical solutions of this application essentially or the part contributing to the conventional technology may be implemented in a form of a software product. The computer software product is stored in a readable storage medium, such as a floppy disk, a USB flash drive, a removable hard disk, a ROM, a RAM, a magnetic disk, or an optical disc of a computer, and includes several instructions for instructing a computer device to perform the methods in embodiments of this application.

All or some of the foregoing embodiments may be implemented by using software, hardware, firmware, or any combination thereof. When software is used to implement embodiments, all or a part of embodiments may be implemented in a form of a computer program product.

The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, communication apparatus, computing device, or data center to another website, computer, communication apparatus, computing device, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a communication apparatus or a data center, integrating one or more usable media. The usable medium may be a magnetic medium (for example, a floppy disk, a hard disk, or a magnetic tape), an optical medium (for example, a DVD), a semiconductor medium (for example, a solid-state drive (Solid-State Drive, SSD)), or the like.

It should be understood that "one embodiment" or "an embodiment" mentioned in the entire specification does not mean that particular features, structures, or characteristics related to the embodiment are included in at least one embodiment of this application. Therefore, "in one embodiment" or "in an embodiment" that appears throughout the entire specification does not necessarily mean a same embodiment. In addition, these particular features, structures, or characteristics may be combined in one or more embodiments by using any appropriate manner. It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

In addition, the terms "system" and "network" may be used interchangeably in this specification. The term "and/or" in this specification describes only a correspondence for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that in embodiments of this application, "B corresponding to A" indicates that B is associated with A, and B may be determined according to A. However, it should be further understood that determining B based on A does not mean that B is determined based only on A. B may alternatively be determined based on A and/or other information.

A person of ordinary skill in the art may be aware that, in combination with the examples described in embodiments disclosed in this specification, units and algorithm steps can be implemented by electronic hardware, computer software, or a combination thereof. To clearly describe the interchangeability between the hardware and the software, the foregoing has generally described compositions and steps of each example according to functions. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all the units may be selected according to actual needs to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the prior art, or all or some of the technical solutions may be implemented in a form of a software product. The computer software product is stored in a storage medium and includes several instructions for instructing a computer device (which may be a personal computer, a server, a network device, or the like) to perform all or some of the steps of the method described in embodiments of this application.

In conclusion, the foregoing descriptions are merely examples of embodiments of the technical solutions of this application, but are not intended to limit the protection scope of this application. Any modification, equivalent replacement, or improvement made without departing from the spirit and principle of this application shall fall within the protection scope of this application.

## Claims

1. A communication method, comprising:
receiving, by an authentication server function AUSF, a subscription permanent identifier SUPI of a terminal device UE that is sent by a unified data management function UDM, wherein the SUPI identifies the UE;
generating, by the AUSF, a first identifier based on the SUPI;
sending, by the AUSF, the first identifier to a security anchor function SEAF;
generating, by the SEAF, a second intermediate key K_{AMF} based on a first intermediate key K_{SEAF}, the first identifier, and an anti bidding down between architectures parameter ABBA;
sending, by the SEAF, the second intermediate key K_{AMF} to an access and mobility management function AMF; and
generating, by the AMF, a non-access stratum NAS key based on the second intermediate key K_{AMF}, wherein the NAS key is for protecting a NAS message.

2. The method according to claim 1, wherein after the generating, by the AUSF, a first identifier based on the SUPI, the method further comprises:
sending, by the AUSF, the first identifier to the UDM; and
receiving, by the UDM, the first identifier, and storing a correspondence between the first identifier and the SUPI.

3. The method according to either of claims 1 and 2, wherein before the generating, by the AUSF, a first identifier, the method further comprises:
receiving, by the AUSF, a first serving network identifier sent by the AMF; and
the generating, by the AUSF, a first identifier comprises:
generating, by the AUSF, the first identifier when the first serving network identifier comprises a public land mobile network identifier PLMN ID and a network identifier NID; or
generating, by the AUSF, the first identifier when the first serving network identifier comprises a PLMN ID and an NID, and an identifier of a network in which the AUSF is located comprises the PLMN ID but does not comprise the NID.

4. The method according to any one of claims 1 to 3, wherein before the generating, by the SEAF, a second intermediate key K_{AMF} based on a first intermediate key K_{SEAF}, the first identifier, and an ABBA, the method further comprises:
generating, by the UDM, a third intermediate key CK and a fourth intermediate key IK based on a long term key K of the UE;
generating, by the UDM, a fifth intermediate key K_{AUSF} based on the third intermediate key CK and the fourth intermediate key IK;
sending, by the UDM, the fifth intermediate key K_{AUSF} to the AUSF;
generating, by the AUSF, the first intermediate key K_{SEAF} based on the fifth intermediate key K_{AUSF}; and
sending, by the AUSF, the first intermediate key K_{SEAF} to the SEAF.

5. The method according to any one of claims 1 to 3, wherein before the generating, by the SEAF, a second intermediate key K_{AMF} based on a first intermediate key K_{SEAF}, the first identifier, and an ABBA, the method further comprises:
generating, by the UDM, a third intermediate key CK and a fourth intermediate key IK based on a long term key K of the UE;
generating, by the UDM, a sixth intermediate key CK' and a seventh intermediate key IK' based on the third intermediate key CK and the fourth intermediate key IK;
sending, by the UDM, the sixth intermediate key CK' and the seventh intermediate key IK' to the AUSF;
generating, by the AUSF, a fifth intermediate key K_{AUSF} based on the sixth intermediate key CK' and the seventh intermediate key IK', and generating the first intermediate key K_{SEAF} based on the fifth intermediate key K_{AUSF}; and
sending, by the AUSF, the first intermediate key K_{SEAF} to the SEAF.

6. The method according to any one of claims 1 to 5, wherein before the receiving, by an AUSF, an SUPI of UE that is sent by a UDM, the method further comprises:
receiving, by the AUSF, an authentication manner that is sent by the AMF and that is supported by the AMF;
sending, by the AUSF to the UDM, the received authentication manner that is supported by the AMF;
selecting, by the UDM, authentication manneran authentication manner based on the authentication manner that is supported by the AMF;
sending, by the UDM, the selected authentication manner to the AUSF; and
sending, by the AUSF, an authentication response to the AMF based on the selected authentication manner.

7. A communication method, comprising:
generating, by a terminal device UE, a first identifier based on a subscription permanent identifier SUPI of the UE;
generating, by the UE, a second intermediate key K_{AMF} based on a first intermediate key K_{SEAF}, the first identifier, and an anti bidding down between architectures parameter ABBA; and
generating, by the UE, a non-access stratum NAS key based on the second intermediate key K_{AMF}, wherein the NAS key is for protecting a NAS message.

8. The method according to claim 7, wherein before the generating, by UE, a first identifier based on an SUPI, the method further comprises:
sending, by the UE, a registration request to an access and mobility management function AMF, wherein the registration request carries a first serving network identifier; and
the generating, by UE, a first identifier based on an SUPI comprises:
generating, by the UE, the first identifier based on the SUPI when the first serving network identifier comprises a public land mobile network identifier PLMN ID and a network identifier NID; or
generating, by the UE, the first identifier based on the SUPI when the first serving network identifier comprises a PLMN ID and an NID, and an identifier of a network in which an AUSF is located comprises the PLMN ID but does not comprise the NID.

9. The method according to claim 7 or 8, wherein before the generating, by the UE, a second intermediate key K_{AMF} based on a first intermediate key K_{SEAF}, the first identifier, and an anti bidding down between architectures parameter ABBA, the method further comprises:
obtaining, by the UE, a third intermediate key CK and a fourth intermediate key IK;
generating, by the UE, a fifth intermediate key K_{AUSF} based on the third intermediate key CK and the fourth intermediate key IK; and
generating, by the UE, the first intermediate key K_{SEAF} based on the fifth intermediate key K_{AUSF}.

10. The method according to claim 7 or 8, wherein before the generating, by the UE, a second intermediate key K_{AMF} based on a first intermediate key K_{SEAF}, the first identifier, and an anti bidding down between architectures parameter ABBA, the method further comprises:
obtaining, by the UE, a third intermediate key CK and a fourth intermediate key IK;
generating, by the UE, a sixth intermediate key CK' and a seventh intermediate key IK' based on the third intermediate key CK and the fourth intermediate key IK;
generating, by the UE, a fifth intermediate key K_{AUSF} based on the sixth intermediate key CK' and the seventh intermediate key IK'; and
generating, by the UE, the first intermediate key K_{SEAF} based on the fifth intermediate key K_{AUSF}.

11. The method according to any one of claims 7 to 10, wherein the generating, by the UE, a second intermediate key K_{AMF} based on a first intermediate key K_{SEAF}, the first identifier, and an anti bidding down between architectures parameter ABBA comprises:
generating, by the UE, the second intermediate key K_{AMF} based on the first intermediate key K_{SEAF}, the first identifier, a length of the first identifier, the ABBA, and a length of the ABBA.

12. A network device, comprising:
a transceiver, configured to receive a subscription permanent identifier SUPI of a terminal device that is sent by unified data management UDM, wherein the SUPI identifies the UE; and
a processor, configured to generate a first identifier based on the SUPI, wherein
the transceiver is further configured to send the first identifier to a security anchor function SEAF;
the processor is further configured to generate a second intermediate key K_{AMF} based on a first intermediate key K_{SEAF}, the first identifier, and an anti bidding down between architectures parameter ABBA;
the transceiver is further configured to send the second intermediate key K_{AMF} to an access and mobility management function AMF; and
the processor is further configured to generate a non-access stratum NAS key based on the second intermediate key K_{AMF}, wherein the NAS key is for protecting a NAS message.

13. The network device according to claim 12, wherein
the transceiver is further configured to send the first identifier to the UDM; and
the transceiver is further configured to receive the first identifier, and store a correspondence between the first identifier and the SUPI.

14. The network device according to either of claims 12 and 13, wherein
the transceiver is further configured to receive a first serving network identifier sent by the AMF; and
that a processor, configured to generate a first identifier specifically comprises:
generating the first identifier when the first serving network identifier comprises a public land mobile network identifier PLMN ID and a network identifier NID; or
generating the first identifier when the first serving network identifier comprises a PLMN ID and an NID, and an identifier of a network in which an authentication server function AUSF is located comprises the PLMN ID but does not comprise the NID.

15. The network device according to any one of claims 12 to 14, wherein
the processor is further configured to generate a third intermediate key CK and a fourth intermediate key IK based on a long term key K of the UE;
the processor is further configured to generate a fifth intermediate key K_{AUSF} based on the third intermediate key CK and the fourth intermediate key IK;
the transceiver is further configured to send the fifth intermediate key K_{AUSF} to the AUSF;
the processor is further configured to generate the first intermediate key K_{SEAF} based on the fifth intermediate key K_{AUSF}; and
the processor is further configured to send the first intermediate key K_{SEAF} to the SEAF.

16. The network device according to any one of claims 12 to 14, wherein
the processor is further configured to generate a third intermediate key CK and a fourth intermediate key IK based on a long term key K of the UE;
the processor is further configured to generate a sixth intermediate key CK' and a seventh intermediate key IK' based on the third intermediate key CK and the fourth intermediate key IK;
the transceiver is further configured to send the sixth intermediate key CK' and the seventh intermediate key IK' to the AUSF;
the processor is further configured to generate a fifth intermediate key K_{AUSF} based on the sixth intermediate key CK' and the seventh intermediate key IK', and generate the first intermediate key K_{SEAF} based on the fifth intermediate key K_{AUSF}; and
the transceiver is further configured to send the first intermediate key K_{SEAF} to the SEAF.

17. The network device according to any one of claims 12 to 16, wherein
the transceiver is further configured to receive an authentication manner that is sent by the AMF and that is supported by the AMF;
the transceiver is further configured to send, to the UDM, the received authentication manner that is supported by the AMF;
the processor is further configured to select authentication manneran authentication manner based on the authentication manner that is supported by the AMF;
the transceiver is further configured to send the selected authentication manner to the AUSF; and
the transceiver is further configured to send an authentication response to the AMF based on the selected authentication manner.

18. A terminal device, comprising:
a processor, configured to generate a first identifier based on a subscription permanent identifier SUPI of the terminal device, wherein
the processor is further configured to generate a second intermediate key K_{AMF} based on a first intermediate key K_{SEAF}, the first identifier, and an anti bidding down between architectures parameter ABBA; and
the processor is further configured to generate a non-access stratum NAS key based on the second intermediate key K_{AMF}, wherein the NAS key is for protecting a NAS message.

19. The terminal device according to claim 18, wherein the terminal device further comprises a transceiver;
the transceiver is further configured to send a registration request to an access and mobility management function AMF, wherein the registration request carries a first serving network identifier; and
that a processor, configured to generate a first identifier based on an SUPI specifically comprises:
generating the first identifier based on the SUPI when the first serving network identifier comprises a public land mobile network identifier PLMN ID and a network identifier NID; or
generating the first identifier based on the SUPI when the first serving network identifier comprises a PLMN ID and an NID, and an identifier of a network in which an AUSF is located comprises the PLMN ID but does not comprise the NID.

20. The terminal device according to claim 18 or 19, wherein
the transceiver is further configured to obtain a third intermediate key CK and a fourth intermediate key IK;
the processor is further configured to generate a fifth intermediate key K_{AUSF} based on the third intermediate key CK and the fourth intermediate key IK; and
the processor is further configured to generate the first intermediate key K_{SEAF} based on the fifth intermediate key K_{AUSF}.

21. The terminal device according to claim 18 or 19, wherein
the transceiver is further configured to obtain a third intermediate key CK and a fourth intermediate key IK;
the processor is further configured to generate a sixth intermediate key CK' and a seventh intermediate key IK' based on the third intermediate key CK and the fourth intermediate key IK;
the processor is further configured to generate a fifth intermediate key K_{AUSF} based on the sixth intermediate key CK' and the seventh intermediate key IK'; and
the processor is further configured to generate the first intermediate key K_{SEAF} based on the fifth intermediate key K_{AUSF}.

22. The terminal device according to any one of claims 18 to 21, wherein
the processor is further configured to generate the second intermediate key K_{AMF} based on the first intermediate key K_{SEAF}, the first identifier, a length of the first identifier, the ABBA, and a length of the ABBA.

23. A computer program storage medium, wherein the computer program storage medium comprises program instructions, and when the program instructions are directly or indirectly executed, the method according to any one of claims 1 to 6 or claims 7 to 11 is performed.

24. A chip system, wherein the chip system comprises at least one processor, and when program instructions are executed by the at least one processor, the method according to any one of claims 1 to 6 or claims 7 to 11 is performed.
